# EUROPÄISCHE PATENTSCHRIFT

(11) **EP 0 673 542 B1**
(45) Veröffentlichungstag und Bekanntmachung des Hinweises auf die Patenterteilung: **20.05.1998**
(21) Anmeldenummer: 94928297.4
(22) Anmeldetag: 11.10.1994
(51) Int. Cl.: H01B 13/02, G02B 6/44

(54) **EINRICHTUNG UND VERFAHREN ZUM VERSEILEN LANGGESTRECKTER VERSEILELEMENTE**
PROCESS AND DEVICE FOR STRANDING ELONGATED STRANDING ELEMENTS
PROCEDE ET DISPOSITIF DE CABLAGE D'ELEMENTS ALLONGES DE CABLAGE

(30) Priorität: 14.10.1993 DE 4335090; 08.07.1994 DE 4424174
(43) Veröffentlichungstag der Anmeldung: 27.09.1995
(73) Patentinhaber: SIEMENS AKTIENGESELLSCHAFT, 80333 München (DE)
(72) Erfinder: LUTHARDT, Reiner,Dipl.-Ing., D-96465 Neustadtg (DE); WÜNSCH, Günter,Dipl.-Ing., D-96465 Neustadt (DE)
(86) Internationale Anmeldenummer: DE9401192
(87) Internationale Veröffentlichungsnummer: WO9510843

(56) Entgegenhaltungen:
- EP-A- 0 034 352
- EP-A- 0 519 284

## Beschreibung

Die Erfindung betrifft eine Einrichtung zum Verseilen langgestreckter Verseilelemente unter Verwendung eines sich axial erstreckenden Speicherkörpers, über den die Verseilelemente in axialer Richtung einer Verseilscheibe zugeführt sind, und dessen in axialer Richtung betrachtet eingangs- und ausgangsseitiges Ende jeweils im Aufnahmeteil einer Aufhängevorrichtung gehalten ist.

Aus der EP-A-0 034 352 ist eine Verseileinrichtung bekannt, die einen beidseits fest in Lagern angebrachten Rohrspeicher aufweist. Koaxial außen zu diesem fest installierten Rohrspeicher ist in einem ortsfesten Ständer ein Tragrohr fest verankert. Am ausgangsseitigen Ende des Rohrspeichers sitzt eine Verseilscheibe über ein dortiges Gewinde mit zugehöriger Haltemutter auf. Bei einer derartigen Verseileinrichtung ist somit der Wechsel des Rohrspeichers erschwert.

Weiterhin ist insbesondere der Wechsel bei sogenannten Speicherdraht-Verseilmaschinen z.B. aufgrund der kleineren Querschnittsabmessungen des Speicherdrahtes oder dessen geringerer Eigensteifigkeit kritisch.

Der Erfindung liegt die Aufgabe zugrunde, einen Weg aufzuzeigen, wie beim praktischen Betrieb einer Verseileinrichtung, die mit einem Speicherkörper arbeitet, die Auswechselbarkeit dieses Speicherkörpers in einfacher Weise sichergestellt werden kann. Gemäß der Erfindung wird diese Aufgabe bei einer Einrichtung der eingangs genannten Art dadurch gelöst, daß das jeweilige Aufnahmeteil in der eingangs- und ausgangsseitigen Aufhängevorrichtung mit Hilfe von Arretiermitteln angebracht ist, die in einer Freigabestellung das jeweilige Aufnahmeteil zum Ein- oder Ausbau des Speicherkörpers in axialer Richtung als Ganzes verschieben lassen und in einer Arretierstellung gegen ungewolltes Lösen im Betrieb lagesichern.

Dadurch, daß das jeweilige Aufnahmeteil am eingangs- sowie ausgangsseitigen Ende des Speicherkörpers in einer Freigabestellung seiner zugehörigen Arretiermittel in axialer Richtung als Ganzes axial verschiebbar ist, kann der Speicherkörper zur Montage in die Verseileinrichtung hineingeschoben oder zur Demontage aus dieser herausgezogen werden. Ist der neue Speicherkörper in die Verseileinrichtung eingelegt, so können die beiden Enden des Speicherkörpers im eingangssowie ausgangsseitigen Aufnahmeteil gegen ungewolltes Lösen im Betrieb lagegesichert werden, indem die Arretiermittel des eingangs- sowie ausgangsseitigen Aufnahmeteils jeweils von ihrer Freigabestellung in ihre Arretierstellung gebracht werden. Auf diese Weise ist der Speicherkörper in einfacher Weise austauschbar, d.h. es ist für den Speicherkörper ein Schnellwechelsystem gebildet, das kurze Montagezeiten bei gleichzeitig einfacher Handbarkeit erlaubt.

Besondere Ausführungsarten der Erfindung sind in den abhängigen Ansprüchen angegeben.

Die Erfindung betrifft auch ein Verfahren zum Auswechseln des Speicherkörpers der Verseileinrichtung, das dadurch gekennzeichnet ist, daß die Arretiermittel der eingangsseitigen und der ausgangsseitigen Aufhängevorrichtung von ihrer Arretierstellung, in der das jeweilige Aufnahmeteil gegen ungewolltes Lösen im Betrieb lagegesichert wird, in eine Freigabestellung gebracht werden, in der das jeweilige Aufnahmeteil zum Ein- oder Ausbau des Speicherkörpers in axialer Richtung als Ganzes verschiebbar wird.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Querschnittsdarstellung die ausgangsseitige Aufhängevorrichtung einer erfindungsgemäßen Einrichtung zum Verseilen langgestreckter Verseilelemente,
- Figur 2: ein Detail der ausgangsseitigen Aufhängevorrichtung nach Figur 1,
- Figuren 3 mit 5: verschiedene Schnittbildansichten der ausgangsseitigen Aufhängevorrichtung nach Figur 2 in einer zu Figur 2 senkrechten, um 90° herausgeklappten Zeichenebene,
- Figur 6: die eingangsseitige Aufhängevorrichtung der erfindungsgemäßen Einrichtung zum Verseilen langgestreckter Verseilelemente, und
- Figur 7: schematisch den Gesamtaufbau einer erfindungsgemäßen Verseileinrichtung mit einer zusätzlichen, eingangsseitigen Ablegevorrichtung für den Speicherdraht.

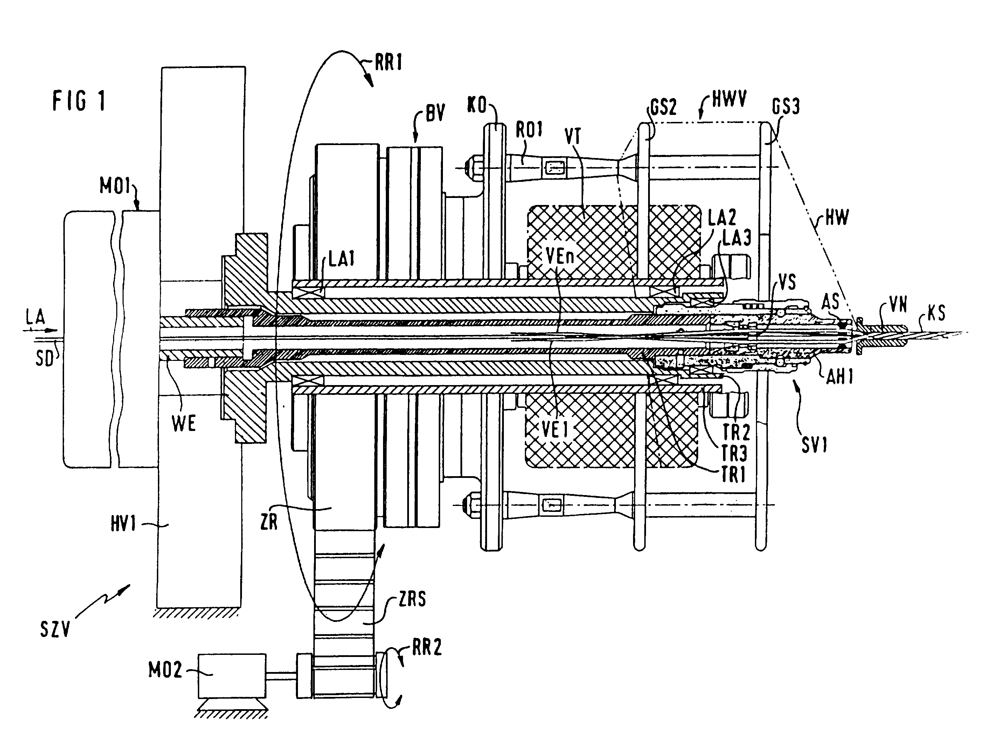

Figur 1 zeigt eine ausgangsseitige Aufhängevorrichtung SZV als Teil einer erfindungsgemäßen Verseileinrichtung mit einem axial gespannten, sich geradlinig erstreckenden Speicherdraht SD zur SZ-Verseilung langgestreckter Verseilelemente VE1 mit VEn. Der Übersichtlichkeit halber sind im Querschnittsbild von Figur 1 nur die beiden Verseilelemente VE1 und VEn entlang eines ausgangsseitigen Teilabschnitts, d.h. teilweise, eingezeichnet, während die übrigen Verseilelemente weggelassen worden sind. Als Verseilelemente kommen vorzugsweise elektrische und/oder optische Übertragungselemente, wie z.B. elektrische Leiter (Adern), Lichtwellenleiter, usw. in Frage. Sie werden auf der Oberfläche des langgestreckten Speicherdrahtes SD dadurch mit wechselnder Schlagrichtung (SZ- Verseilung) vorverseilt, daß der vorgespannte Speicherdraht SD abwechselnd in der einen und dann in der anderen Drehrichtung, d.h. alternierend, um seine Verseilachse LA bewegt wird. Dieser Wechsel der Rotationsrichtung ist mit einem Doppelpfeil RR1 angedeutet.

Im Rahmen der Erfindung wird unter dem Begriff "Speicherdraht" vorzugsweise ein langgestreckter, biegeelastischer, spannbarer Körper verstanden. Dies kann beispielsweise ein massiver Strang wie z.B. ein Stahldraht, ein Seil aus mehreren Einzelfasern wie z.B. Aramidfasern, ein Faden oder dergleichen sein. Für den Speicherdraht ist vorzugsweise eine möglichst kreisrunde Querschnittsform vorgesehen. Der Speicherdraht SD weist vorteilhaft eine reibungsarme Gleitoberfläche auf. Dazu ist der Speicherdraht SD vorzugsweise aus einem reibungsarmen Werkstoff hergestellt oder zumindest mit einem reibungsarmen Werkstoff beschichtet. Insbesondere eignet sich dazu ein Verbundwerkstoff wie z.B. PTFE/AL₂O₃. Dieser Werkstoff zeichnet sich durch hohe Verschleißfestigkeit sowie sehr niedrige Reibungswerte aus. Vorzugsweise weist der Speicherdraht SD eine Längserstreckung zwischen 1 und 20 m, insbesondere zwischen 5 und 10m, bevorzugt um etwa 10 m, auf. Sein Außendurchmesser wird zweckmäßigerweise durch den Durchmesser der Verseilelemente VE1 mit VEn sowie deren Anzahl bestimmt. Dabei wird der Durchmesser des Speicherdrahtes SD vorzugsweise derart gewählt, daß sich beim fertigen Verseilprodukt um den Umfang betrachtet jeweils zwischen zwei benachbarten Verseilelementen VE1 mit VEn eine Lücke mit etwa der gleichen Größe wie die der Verseilelemente ergibt. Der Außendurchmesser des Speicherdrahtes SD wird vorzugsweise zwischen 1 und 4 mm, insbesondere zwischen 1 und 2 mm, bei Verwendung von Verseilelementen mit einem Außendurchmesser zwischen 0,4 und 2 mm, insbesondere zwischen 0,5 und 1,4 mm, gewählt.

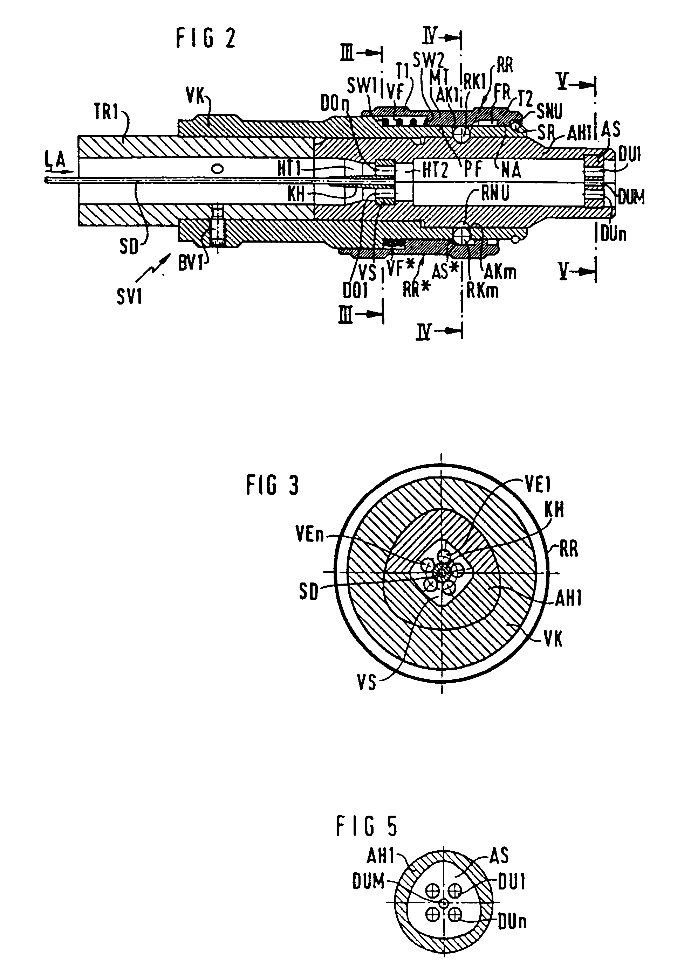

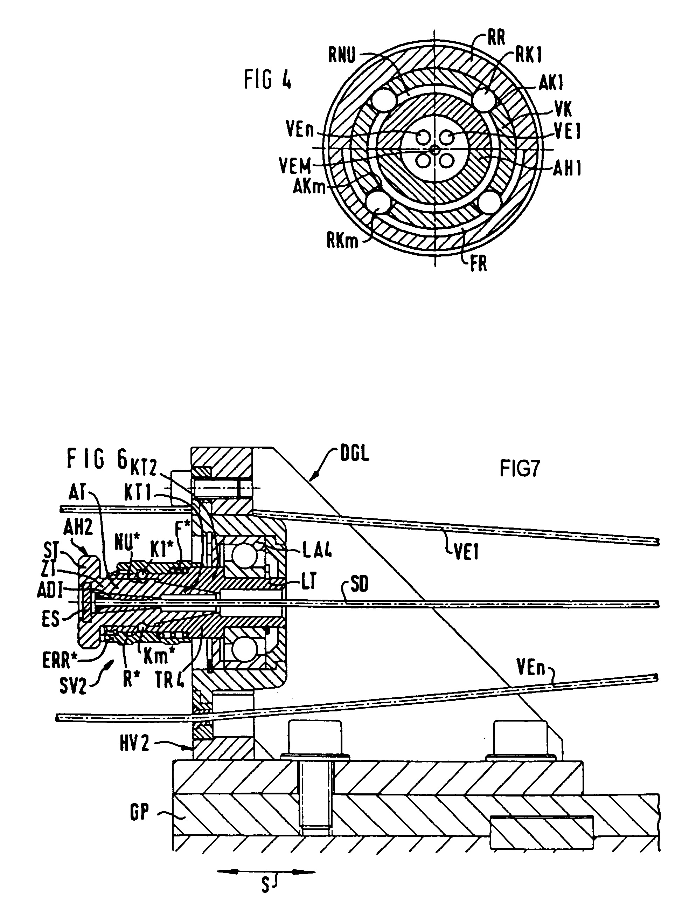

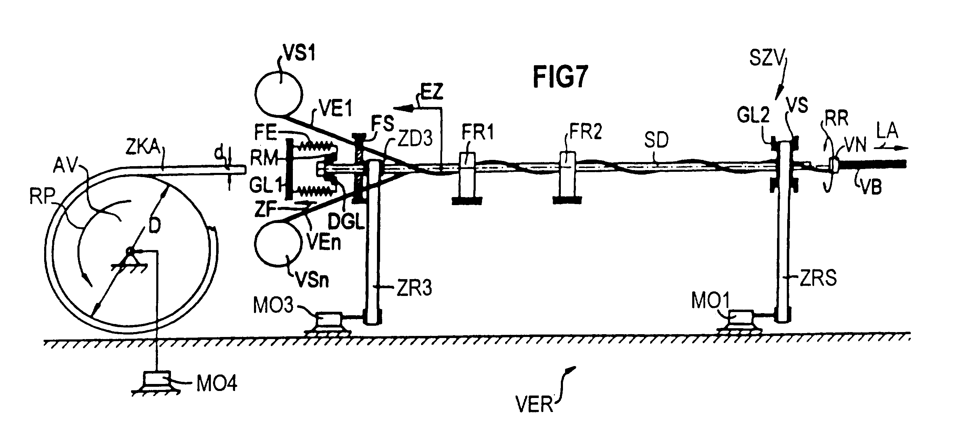

Zum Antrieb des Speicherdrahtes SD ist dieser an seinem ausgangsseitigen Ende mit einer rotierenden Verseilscheibe VS vorzugsweise fest verbunden und dort drehbar aufgehängt. Nähere Angaben dazu sind im Beschreibungsteil zu Figur 2 gemacht. An seinem eingangsseitigen Ende ist der Speicherdraht SD in einer eingangsseitigen Aufhängevorrichtung, insbesondere einem Drahtgegenlager, drehbar gehalten, die in Figur 6 im Detail dargestellt ist und mit DGL bezeichnet ist. Zwischen der eingangs- sowie ausgangsseitigen Aufhängevorrichtung DGL, SZV verläuft der Speicherdraht SD mit seiner eigentlichen Speicherstrecke im wesentlichen frei zugänglich, was in der Figur 7 schematisch angedeutet ist.

In der ausgangsseitigen Aufhängevorrichtung SZV von Figur 1 sitzt die Verseilscheibe VS zusammen mit einer in Durchlaufrichtung LA nachfolgenden Führungs- bzw. Adapterscheibe AS in einer Aufnahmevorrichtung SV1, insbesondere einer Aufnahmehülse oder einem Aufnahmerohr mit einem im wesentlichen kreiszylinderförmigen Innendurchgang, fest. Diese Aufnahmevorrichtung SV1 ist als eigenständiges Bauteil zur gemeinsamen Unterbringung bzw. Aufnahme des Speicherdrahtes SD, der Verseilscheibe VS und weiterer, unterschiedlicher Verseilkomponenten, wie zum Beispiel der Adapterscheibe AS, den Verseilelementen VE1 mit VEn, von Verseilnippeln oder dergleichen, ausgebildet. Sie ist am ausgangsseitigem Ende eines langgestreckten, drehbaren, insbesondere rotierend angetriebenen Tragrohrs TR1 mit Hilfe von Arretiermitteln (vgl. z.B. RK1 mit RK2m in Figur 2) derart angebracht, daß sie gegen ungewolltes Lösen im Betrieb gesichert sowie zur Montage bzw. Demontage in axialer Richtung als Ganzes, d.h. mit den in ihr untergebrachten Verseilkomponenten, abziehbar ist.

Das Tragrohr TR1 von Figur 1 umgibt den Speicherdraht SD bezüglich dessen Verseilachse LA rotationssymmetrisch vorzugsweise entlang dessem ausgangsseitigen Endabschnitt. Dem Tragrohr TR1 ist an seinem der Verseilscheibe VS abgewandten Ende eine Antriebseinrichtung MO1 zugeordnet, die das Tragrohr mit wechselnder Drehrichtung (oszillierend) betreibt. Die Antriebseinrichtung MO1 ist im Ausführungsbeispiel von Figur 1 vorzugsweise durch einen im Zentrum durchgebohrten Motor gebildet, durch dessen Durchgangsöffnung der Speicherdraht SD zusammen mit den über ihn geführten Verseilelementen VE1 mit VEn hindurchgeführt ist. Dabei ist das Tragrohr TR1 an seinem einlaufseitigen Ende zweckmäßigerweise mit der durchgebohrten Antriebswelle WE der Antriebseinrichtung MO1 fest verbunden, so daß durch das Tragrohr TR1 eine Art verlängerte Hohlwelle gebildet ist. Insbesondere weist dazu das Tragrohr TR1 im wesentlichen einen kreisylinderförmigen Innendurchgang in Abzugsrichtung LA auf. Die Antriebseinrichtung MO1 ist an einer feststehenden, flanschartigen Haltevorrichtung HV1 fest angebracht, wobei deren Antriebswelle WE durch die zentrale Durchgangsbohrung der Haltevorrichtung HV1 hindurchgesteckt ist.

Die Aufnahmevorrichtung SV1 stützt sich über ein vorzugsweise etwa ringförmiges Lager LA3 gegenüber einem äußeren, feststehenden Tragrohr TR2 ab, das das Tragrohr TR1 möglichst konzentrisch bzw. koaxial umgibt. Das Tragrohr TR2 ist dabei an einer feststehenden, flanschartigen Haltevorrichtung HV1 festmontiert, an der auch die Antriebseinrichtung MO1 feststehend aufgehängt ist. Koaxial bzw. konzentrisch zu diesem feststehenden Tragrohr TR2 ist schließlich ein weiteres, äußeres Tragrohr TR3 vorgesehen, das über eingangs- sowie ausgangsseitige, vorzugsweise etwa ringförmige Lager LA1, LA2 drehbar auf dem feststehenden Tragrohr TR2 gehalten ist. Auf dem Tragrohr TR3 sitzt vorzugsweise eine Wickel- bzw. Spinneinrichtung HWV. Zum Beispiel mit Hilfe einer Antriebseinrichtung M02, insbesondere einem Motor, kann über eine Zahnriemenscheibe ZRS ein Zahnrad ZR am einlaufseitigen Ende des Tragrohrs TR3 und damit auch die Wickeleinrichtung HWV entsprechend dem Pfeil RR2 unabhängig von der Verseilscheibe VS rotierend angetrieben werden. Die drehbare Wickeleinrichtung HWV kann gleichzeitig mit Hilfe einer Bremsvorrichtung BV, insbesondere einer Hysteresebremse, kontrolliert abgebremst werden, die zwischen dem Zahnrad ZR und ihrem Korb KO angeordnet ist. Die Wickeleinrichtung HWV weist eine Vorratsspule VT mit einem strangförmigen Wickelgut, insbesondere einer Haltewendel HW, auf. Die Haltewendel HW wird z.B. über einen Querstab RO1 sowie sich radial erstreckende Längsstäbe z.B. GS2 und GS3 (des Gestells des Korbes KO) einem der Adapterscheibe AS ausgangsseitig nachgeordneten Verseilnippel VN schräg, d.h. in Richtung auf dessen gedachten Verseilpunkt zu, zugeführt. Auf diese Weise können im Verseilnippel VN die langgestreckten Verseilelemente VE1 bis VEn unmittelbar nach ihrer SZ- Verseilung mit Hilfe der Haltewendel HW in definierter Weise bewickelt, d.h. unter einer definierten Wickel- Zugspannung, als Verseilverbund fixiert werden, so daß eine umwickelte Kabelseele KS gebildet ist.

Figur 2 zeigt die Aufnahmevorrichtung SV1 der ausgangsseitigen Aufhängevorrichtung SZV von Figur 1 am Ende des Tragrohrs TR1 im Detail. Unverändert übernommene Elemente aus Figur 1 sind dabei jeweils mit den gleichen Bezugszeichen versehen. Die Aufnahmevorrichtung SV1 weist am Ende des Tragrohrs TR1 vorzugsweise ein etwa rohrförmiges Verbindungsteil VK auf, in das ein zweckmäßigerweise rohrförmiges, insbesondere hülsenartiges, Aufnahmeteil AH1 einführbar bzw. einsteckbar ist. Das Verbindungsteil VK sitzt dabei mittels Befestigungsmittel BV1, insbesondere Schrauben oder Verbindungsstifte, fest auf dem ausgangsseitigen Ende des Tragrohres TR1 als Verlängerung auf. Das Verbindungsteil VK dient also zur Ankopplung des Aufnahmeteils AH1 an das Tragrohr TR1. Vorzugsweise weist das Verbindungsteil VK einen Innendurchmesser auf, der etwa dem Außendurchmesser des Aufnahmeteils AH1 und/oder des Tragrohrs TR1 entspricht. Das Aufnahmeteil AH1 wird in der Durchgangsöffnung des Verbindungsstücks VK mit Hilfe von Arretiermitteln in axialer, in radialer Richtung sowie in Umfangsrichtung für den Betrieb derart lagegesichert, daß eine möglichst starre Verbindung mit dem Tragrohr TR1 als Antriebswelle erreicht ist. Gleichzeitig erlauben diese Arretiermittel in vorteilhafter Weise möglichst auch einen Schnellwechsel des kompletten Aufnahmeteils AH1 mit den darin liegenden Verseilkomponenten, vorzugsweise ohne Werkzeug. Zur besseren Veranschaulichung der Wirkungsweise dieses Schnellverschlusses ist die Aufnahmevorrichtung SV1 in der oberen Bildhälfte von Figur 2 in ihrer Arretierstellung sowie zusätzlich in der unteren Bildhälfte gleichzeitig in ihrer Freigabestellung zum Einführen oder Herausziehen des Aufnahmeteils AH1 gezeichnet.

Zur axialen Sicherung des Aufnahmeteils AH1 im Betrieb sind im Außenmantel des Verbindungsteils VK Rastkugeln RK1 mit RKm als Arretiermittel vorgesehen, die kreisringförmig um den Umfang verteilt in queraxial zum Aufnahmeteil AH1 durchgängigen Einzel- Durchgangsöffnungen AK1 bis AKm sitzen. Der Einfachheit halber ist im Querschnittsbild von Figur 2 lediglich die Rastkugel RK1 in der oberen Bildhälfte sowie die Rastkugel RKm in der unteren Bildhälfte gezeichnet. Funktion und Wirkungsweise dieser beiden Rastkugeln gelten für die übrigen Rastkugeln RK2 mit RKm-1 analog.

In ihrer Arretierstellung sitzt die Rastkugel RK1 in der sich radial nach innen hin verjüngenden, vorzugsweise konisch zulaufenden Durchgangsöffnung AK1 fest und ragt teilweise in eine vorzugsweise etwa ringförmige Rastnut RNU am Außenumfang des Aufnahmeteils AH1 hinein, so daß eine queraxiale Sperre bzw. Verriegelung für das Aufnahmeteil AH1 gegen axiales Verschieben im Inneren des rohrförmigen Verbindungsstücks VK gebildet ist. Die radial nach innen konisch zulaufende Duchgangsöffnung AK1 ist dabei zweckmäßigerweise so dimensioniert, daß die Rastkugel RK1 radial nach innen hin nicht vollständig durchfallen kann, was insbesondere beim Herausnehmen der Aufnahmeteils AH1 von Bedeutung ist. Die Rastnut RNU verjüngt sich zweckmäßigerweise ebenfalls radial nach innen hin zu. Sie weist einen etwa sektor- bzw. trapezförmigen Querschnitt auf, so daß von ihr der radial nach innen, aus der Kontur des Verbindungsteils VK hervorstehende Teilausschnitt, insbesondere die untere Kugelhälfte, der Rastkugel RK1 formschlüssig, im wesentlichen ohne seitliches bzw. axiales Spiel, aufgenommen werden kann.

In dieser Arretierposition in der Rastnut RNU wird die Rastkugel RK1 durch einen zylinderförmig ausgebildeten Rastring RR, der außen auf dem Verbindungsstück VK endseitig aufsitzt, eingerastet gehalten. Der Rastring RR weist dazu einen etwa rechteckförmigen, radial nach innen abstehenden Absatz als Mittelteil MT auf, dessen Unterseite PF die Durchgangsöffnung AK1 von außen her plan abdeckt. Dabei liegt der Rastring RR mit seinem Mittelteil MT direkt an der Rastkugel RK1 an, so daß diese ohne radiales Spiel in ihre Arretierstellung gedrückt und dort im Betrieb dauerhaft fixiert ist. Sie kann sich dort während der Rotationsbewegung der Aufnahmevorrichtung SV1 nicht radial nach außen bewegen. Auf diese Weise ist ein ungewolltes axiales Lösen des Aufnahmeteils AH1 zuverlässig vermieden.

Der Rastring RR steht in der Arretierposition unter Federspannung einer Verschlußfeder VF, die das Verbindungsteil VK ringförmig umgibt. Die Verschlußfeder VF stützt sich dabei zwischen einer Seitenwand SW1 eines etwa treppenförmigen, vertikal abfallenden Absatzes des Verbindungsstücks VK und der ausgangsabgewandten, vertikalen Seitenwand SW2 des Mittelteils MT des Rastrings RR. Die Verschlußfeder VF ist also in einer Art Aufnahmenut zwischen der etwa senkrecht abfallenden Abbruchkante des Verbindungsstücks VK und dem etwa rechteckförmig vorspringenden Mittelteil MT des Rastrings RR axial eingespannt bzw. eingeklemmt. Der Rastring RR deckt dabei mit seinem linksseitigen, ausgangsabgewandten Teilabschnitt T1 diese Aufnahmenut nach außen hin ab, so daß eine Art Aufnahmekammer für die Verschlußfeder VF gebildet ist.

An seinem ausgangsseitigen Ende ist der Rastring RR mit Hilfe eines Sprengringes SR arretiert, der in eine Nut im Außenmantel des ausgangsseitigen Endes des Verbindungsstücks VK teilweise eingelassen ist und dort radial nach außen abstehend festsitzt. Der Sprengring SR ist in dieser Arretierstellung des Rastrings RR in eine etwa nutförmige Aussparung SNU des ausgangsseitigen Teilabschnitts T2 des Rastrings RR eingerastet, so daß der Rastring RR in dieser Arretierstellung unter Federspannung festgehalten und in Durchlaufrichtung LA gesperrt bzw. arretiert ist. Dabei begrenzt eine Nase NA am Rastring RR zusammen mit dem Sprengring SR den Spannweg und verhindert ein Herunterfallen des Rastrings RR in axialer Richtung (Durchlaufrichtung) LA. Auf diese Weise sitzt der Rastring RR fest am ausgangsseitigen Ende des Verbindungsstücks VK auf, ohne sich selbsttätig axial verschieben zu können. In dieser Arretierstellung des Rastrings RR bewirkt dann die Rastkugel RK1 eine Verriegelung bzw. Sperre quer zur Durchlaufrichtung LA (queraxial) für das Aufnahmeteil AH1 im rohrförmigen Verbindungsstück VK.

Um diese queraxiale Sperrverriegelung zum Einführen und/oder Herausnehmen der Aufnahmehülse AH1 zu lösen bzw. aufzuheben, wird der Rastring RR entgegen der Durchlaufrichtung LA und damit entgegen der Federkraft der Verschlußfeder VF in eine Freigabestellung zurückgedrückt. Diese Freigabestellung des Rastrings ist in der unteren Bildhälfte dargestellt, wobei dort der Rastring RR sowie dessen Verschlußfeder VF jetzt zusätzlich mit einem * gekennzeichnet sind. Wird der Rastring aus seiner Arretierstellung in seine Freigabestellung (RR*) gedrückt, so kann sich z.B. die Rastkugel RKm in eine ringförmig im Außenmantel des Aufnahmeteils AH1 umlaufende, im Querschnittsbild von Figur 2 etwa rechteckförmige Aussparung bzw. Rückhaltekammer FR (vgl. die obere Bildhälfte) des Rastrings RR* radial nach außen hin zurückbewegen, sobald die Aufnahmehülse AH1 in axialer Richtung LA herausgezogen oder in Gegenrichtung eingeführt wird. Dann wird nämlich die Rastkugel RKm von einer der beiden vorbeilaufenden, abgeschrägten Seitenwände der Rastnut RNU im Aufnahmeteil AH1 aus dieser herausgehoben und nach außen gedrückt, so daß die Durchgangsöffnung des Verbindungsstücks VK innen möglichst vollständig freigegeben wird. Auf diese Weise ist die queraxiale Verriegelung für das Aufnahmeteil AH1 aufgehoben, d.h. die Rastkugel RKm ragt dann nicht mehr in die Durchgangsöffnung des Verbindungsstücks VK hinein. Die Rastkugeln sind dabei frei verschiebbar zwischen dem Rastring RR* und dem Verbindungsstück VK jeweils in ihrer Durchgangsöffnung gehalten. Die in der Freigabestellung zusammengedrückte Verschlußfeder VF* begrenzt vorzugsweise den axialen Verschiebeweg für den Rastring RR in Gegenrichtung zur Abzugsrichtung LA.

Ausgehend von der Freigabestellung des Rastrings RR* in der unteren Bildhälfte wird dieser z.B. nach dem Einführen eines neu mit Verseilkomponenten bestückten Aufnahmeteils AH1 losgelassen, so daß er durch die Verschlußfeder VF* in seine Arretier- bzw. Rastposition (vgl. obere Bildhälfte) selbsttätig wieder zurückgedrückt wird. Dabei wird z.B. die Rastkugel RKm dann durch die vorbeilaufende, leicht abgeschrägte Flanke AS* der Aussparung bzw. der Rückhaltekammer FR des Rastrings RR radial nach innen auf die Rastnut RNU zu gedrückt und dort eingerastet.

Auf diese Weise ist ein Schnellverschluß für das Aufnahmeteil AH1 gebildet, der dessen Ein- und/oder Ausbau (Wechsel) vorteilhaft ohne Werkzeug in einfacher Weise erlaubt. Es ist also eine Bedienung der Verschlußvorrichtung SV1 von Hand ermöglicht, d.h. es wird zum Beispiel mit einer Hand (vorzugsweise in der Art einer "Einhandkupplung") der Rastring RR in seine Freigabestellung gebracht, während mit der anderen Hand das Aufnahmeteil AH1 aus dem Verbindungsstück VK1 herausgezogen oder hineingeschoben werden kann.

Eine Sicherung des Aufnahmeteils AH1 im Verbindungsstück VK in Umfangsrichtung (= Verdrehsicherung) wird insbesondere mittels einer formschlüssigen Verbindung, insbesondere einer Polygonverzahnung, als Arretiermittel zwischen dem Außenmantel des Aufnahmeteiles AH1 und dem Innenmantel des Verbindungsstücks VK sichergestellt. Auf diese Weise können Drehmomente zwischen diesen beiden Bauteilen zuverlässig in Umfangsrichtung, insbesondere weitgehend schlupfarm, übertragen werden, d.h. es ist eine weitgehend verdrehfeste bzw. starre Mitnahme sichergestellt. Gleichzeitig ist eine leichte, axiale Verschiebbarkeit und damit Montier- und/oder Demontierbarkeit des Aufnahmeteils AH1 am Tragrohr TR1 ermöglicht. Die gleiche Art von Arretiermittel ist vorzugsweise auch zur radialen Lagesicherung des Aufnahmeteils AH1 verwendbar. Nähere Angaben zu Funktion und Wirkungsweise der formschlüssigen Verbindung zwischen dem Aufnahmeteil AH1 und dem Verbindungsstück VK werden zu den Figuren 3 mit 5 gemacht.

Auf diese Weise kann das Aufnahmeteil AH1 als eigenständige Einheit, d.h. als Ganzes, mit den in ihm untergebrachten und/oder an ihm angebrachten Verseilkomponenten, wie z.B. der Verseilscheibe VS, der Adapterscheibe AS, dem Speicherdraht SD, usw. aus der ausgangsseitigen Aufhängevorrichtung SZV herausgenommen und ggf. gegen andere ausgetauscht werden. Zweckmäßigerweise ist dabei das Aufnahmeteil AH1 in zwei Hälften teilbar. Sein Inneres ist dann frei zugänglich, so daß dann aus seinem Inneren die Verseilkomponenten vorzugsweise von Hand, d.h. ohne Werkzeug, entnommen und z.B. durch neue ersetzt werden können. Durch diese freie Zugänglichkeit des vom Tragrohr TR1 lösbaren Aufnahmeteils AH1 können insbesondere die Verseilelemente VE1 bis VEn einfach sowie schnell durch die Durchgangsöffnungen DO1 mit DOn der Verseilscheibe VS und/oder durch die Durchgangsöffnungen DU1 mit DUn der der Verseilscheibe VS nachgeordneten Adapterscheibe AS hindurchgefädelt werden. Vorteilhaft ist zum Beispiel auch ein Austausch des Speicherdrahts SD bei Verschleiß ermöglicht. Der Speicherdraht SD ist in vorteilhafter Weise mit der Verseilscheibe VS an seinem ausgangsseitigen Ende fest verbunden, insbesondere über eine stoffschlüssige Verbindung. Dies kann beispielsweise eine sich in axialer Richtung LA konisch verbreiternde, rotationssymmetrische Hülse bzw. Nase KH sein. Dadurch läßt sich der Speicherdraht SD vorteilhaft gemeinsam mit der Verseilscheibe VS auswechseln bzw. austauschen, was aufgrund der insbesondere geringen Abmessungen der Verseilscheibe VS sowie der geringen Querschnittsdimensionen des Speicherdrahtes SD deren Handhabung erleichtert. Dabei ist die Verseilscheibe VS über die Nase KH vorzugsweise durch Löten oder Schweißen mit dem Speicherdraht SD verbunden. Besonders unempfindlich gegenüber etwaigen Verbindungsbrüchen, d.h. besonders dauerfest, ist insbesondere eine Klebeverbindung zwischen der Verseilscheibe VS und dem Speicherdraht SD. Vorteilhaft ist die Hülse KH im Zentrum der Verseilscheibe VS angebracht. Durch ihre in Durchlaufrichtung konisch zunehmende Verbreiterung unterstützt sie die Zuführung der Verseilelemente VE1 bis VEn zu den konzentrisch bezüglich der Verseilachse in der Art eines Lochkranzes angeordneten Durchgangsöffnungen DO1 bis DOn. Sie vermeidet vorteilhaft ein allzu abruptes, starkes Abheben der Verseilelemente VE1 bis VEn vom Speicherdraht SD durch ihren leicht ansteigenden (konischen) Verlauf in axialer Richtung auf die Durchlaßöffnungen DO1 bis DOn zu.

Die axiale Lage bzw. Position der Verseilscheibe VS für den Betrieb ist dabei durch die verbleibende Öffnung zwischen zwei im Aufnahmeteil AH1 queraxial angebrachten, insbesondere eingeklebten Halteteilen HT1 und HT2 vorgegeben, so daß die Lage der Verseilscheibe VS für eine Bedienperson unverwechselbar ist. Zwischen diesen beiden queraxialen Halteteilen HT1, HT2 läßt sich die Verseilscheibe VS formschlüssig bzw. Paßgenau einsetzen und damit in axialer Richtung lagesichern. Sie bilden somit in vorteilhafter Weise zugleich Mittel zum axialen Vorspannen des Speicherdrahtes SD in der ausgangsseitigen Aufhängevorrichtung SZV, da sie eine axiale Sperre für die Verseilscheibe VS mit dem an ihr endseitig angebrachten Speicherdraht SD. Entsprechend dazu kann auch die Adapterscheibe AS im Aufnahmeteil AH1 queraxial eingepaßt sein oder in eine Ringnut am Innenumfang des Aufnahmeteils AH1 eingesteckt sein.

Die Durchgangsbohrungen DO1 mit DOn der Verseilscheibe VS sind auf einem zum Speicherdraht SD konzentrischen Teilkreis vorgesehen. Sie sind vorzugsweise um jeweils etwa den gleichen Umfangswinkel gegeneinander versetzt angeordnet und weisen jeweils im wesentlichen den selben radialen Abstand von der Außenoberfläche des Speicherdrahtes auf. Die Durchgangsbohrungen DO1 mit DOn sind vorzugsweise mit möglichst kleinem radialen Abstand zur Verseilachse angeordnet, um ein Abheben der Verseilelemente VE1 mit VEn vom Speicherdraht SD und damit Störungen beim Verseilvorgang weitgehend zu vermeiden. Die Verseilscheibe VS bildet somit eine Art rotationssymmetrischen Lochkranz. Die Durchgangsbohrungen DO1 mit DOn sind im Querschnitt betrachtet vorzugsweise an die Querschnittsform der Verseilelemente VE1 mit VEn angepaßt, insbesondere etwa kreisrund ausgebildet. Ihr Innendurchmesser ist vorzugsweise mindestens gleich, insbesondere größer als der Außendurchmesser etwa kreisrunder Verseilelemente gewählt, so daß diese möglichst beanspruchungsfrei hindurchgeführt sind.

Werden die Verseilelemente VE1 mit VEn z.B. nicht auf ein zentrales Kernelement aufgeseilt, so wird jedes Verseilelement VE1 mit VEn zweckmäßigerweise jeweils einer der Durchgangsöffnungen der Adapter- bzw. Verteilerscheibe AS zugeordnet. Deren Durchgangsöffnungen DU1 mit DUn sind im übrigen analog zu denen der Verseilscheibe ausgebildet und angeordnet. Vorzugsweise erfolgt die Zuordnung zwischen den Durchgangsöffnungen DO1 mit DOn der Verseilscheibe VS und den Durchgangsöffnungen DU1 mit DUn der Adapterscheibe AS derart, daß das jeweilige Verseilelement nach dem Austritt aus seiner ihm zugeordneten Durchgangsöffnung der Verseilscheibe VS möglichst parallel zur Verseilachse sowie möglichst geradlinig auf die nachgeordnete, ihm spezifisch zugeordnete Durchgangsöffnung der Adapterscheibe AS zuläuft. Mit anderen Worten heißt das, daß im Einlegezustand die Durchgangsöffnungen DO1 mit Don der Verseilscheibe VS zu den Durchgangsöffnungen DU1 mit DUn der Adapterscheibe zweckmäßigerweise möglichst fluchtend und damit kongruierend angeordnet sind, um die Verseilelemente in definierter Weise in die Verseileinrichtung einziehen zu können.

Gegebenenfalls kann es auch zweckmäßig sein, eines der Verseilelemente VE1 mit VEn durch eine zusätzliche Durchgangsbohrung DUm im Zentrum der Adapterscheibe AS hindurchzuführen. Auf dieses zentral geführte Verseilelement können dann die anderen Verseilelemente bevorzugt aufgeseilt werden. Ein derartiges Kernelement kann bevorzugt von der gleichen Art wie die übrigen, aufzubringenden Verseilelemente sein. Genauso kann es unter Umständen auch zweckmäßig sein, ein von den übrigen Verseilelementen verschiedenes Kernelement bei der Vorverseilung auf dem Speicherdraht mitzuführen. So kann beispielsweise als Kernelement ein besonders zugfestes, langgestrecktes Zentralelement vorgesehen sein.

Die Adapterscheibe AS sorgt also ggf. vorteilhaft für eine derartige nachträgliche Aufteilung der Verseilelemente, daß ein vorgebbares Verseilelement aus der Gruppe der vorverseilten, langgestreckten, insbesondere strangförmigen, Verseilelemente VE1 bis VEn als Zentralelement durch seine zentrale Durchgangsöffnung DUM hindurchgeführt wird und dadurch letztlich ein Aufseilen der übrigen Verseilelemente auf dieses Zentralelement im nachfolgenden Verseilnippel VN (vgl. Figur 1) ermöglicht wird.

Zur besseren Veranschaulichung, wie das Aufnahmeteil AH1 in der Aufnahmevorrichtung SV1 von Figur 2 aufgehängt ist sowie wie die Verseilkomponenten im Aufnahmeteil AH1 untergebracht sind, zeigen die Figuren 3 mit 5 Schnittbilder an drei verschiedenen Schnittstellen von Figur 2 in einer zur Figur 2 senkrechten, um 90° herausgeklappten Zeichenebene. Unverändert übernommene Elemente aus den Figuren 1 und 2 sind dabei in den Figuren 3 mit 5 jeweils mit den gleichen Bezugszeichen versehen.

Bei einem Schnitt entlang der Linie III-III in Figur 2 im Bereich der Verseilscheibe VS ergibt sich das Querschnittsbild von Figur 3, das die dortigen Bauteile der Aufnahmevorrichtung SV1 vergrößert wiedergibt. Das Aufnahmeteil AH1 weist eine etwa dreiecksförmige Außenkontur ("Dreierpolygon") auf und sitzt in der dazu passend "dreierpolygonförmig" ausgeformten Innenkontur der Durchgangsöffnung des Verbindungsstücks VK formschlüssig (Paßsitz) fest. Durch diesen Paßsitz ist eine sichere Drehmomentübertragung in Umfangsrichtung zwischen dem Verbindungsstück VK und dem Aufnahmeteil AH1 gewährleistet. Dabei ist durch die schrägen Flächen der vieleckigen Außenumrandung des Aufnahmeteils AH1 bzw. dessen vieleckige "Einpassung" in das Verbindungsstück VK ein "Durchrutschen" des Aufnahmeteils AH1 (wie z.B. bei einer kreisrunden "Einpassung") zuverlässig vermieden. Das Aufnahmeteil AH1 wird dadurch vom Verbindungsstück in die jeweilige Drehrichtung weitgehend schlupffrei, d.h. verdrehgesichert, mitgenommen.

Auch in radialer Richtung ergibt sich durch die formschlüssige Einpassung eine Lagesicherung für das Aufnahmeteil AH1. Unwuchten, d.h. ein Ausbrechen des Aufnahmeteils AH1, und damit etwaig unzulässige Preßkräfte auf das Aufnahmeteil AH1 sind somit auch bei wechselnden Drehzahlen (, z.B. von +/- 5000 U/min bei der SZ- Verseilung,) weitgehend vermieden, d.h. es ist eine Stabilisierung der Laufruhe des Aufnahmeteils AH1, des Verbindungsstücks VK, des Tragrohrs TR1 und somit des kompletten Antriebsstranges ermöglicht. Es ist somit sowohl in Umfangsrichtung als auch in radialer Richtung eine Art starre Verbindung zwischen dem Aufnahmeteil AH1 und dem Verbindungsstück VK hergestellt. Gleichzeitig bleibt in vorteilhafter Weise für das Aufnahmeteil AH1 trotzdem eine einfache axiale Montier- bzw. Demontierbarkeit erhalten, da sich das Aufnahmeteil AH1 bei Betätigung des Rastrings RR in seine Freigabestellung ohne weiteres axial verschieben läßt (vgl. Figuren 1, 2).

Die Verseilscheibe VS weist ebenfalls eine vieleckförmige Außenkontur, insbesondere eine etwa viereckförmige bzw. rautenförmige Außenumrandung auf ("Viererpolygon") und sitzt während der Rotationsbewegung des Tragrohrs TR1 bzw. der Aufnahmevorrichtung SV1 in dem in Drehrichtung fest mitgenommenen Aufnahmeteil AH1 formschlüssig, d.h. ohne Spiel in radialer Richtung, fest. Dazu weist das Aufnahmeteil AH1 eine Innenkontur auf, die entsprechend der Außenform der Verseilscheibe VS "Viererpolygonförmig" ausgebildet ist. Durch diesen formschlüssigen, festen Sitz (Paßsitz) in radialer sowie in Umfangsrichtung wird sie im Aufnahmeteil AH1 in Drehrichtung bei gleichzeitig stabilen Lauf zuverlässig mitgenommen, d.h. sie ist in radialer Richtung gegen Verschiebungen aus ihrer rotationssymmetrischen Anordnung heraus lagegesichert sowie in Umfangsrichtung durch die nichtrunden Außenkontur- "Einpassung" verdrehgesichert. Funktion und Wirkungsweise der Unterbringung der Verseilscheibe VS im Aufnahmeteil AH1 entsprechen somit der des Aufnahmeteils AH1 selbst im Verbindungsstück VK bei Betrachtung in Umfangsrichtung sowie in radialer Richtung. Für die Adapterscheibe AS ist zweckmäßigerweise die selbe Art von Lagesicherung wie für die Verseilscheibe VS gewählt.

Zur festen Mitnahme der Verseilscheibe und/oder der weiteren Verseilkomponenten in Umfangsrichtung bei gleichzeitig stabilem Lauf während der Rotationsbewegung des Aufnahmeteils AH1 sind diese in dessem Inneren (Durchgangsöffnung) jeweils mittels formschlüssiger Verbindungen lagegesichert. Dafür eignen sich insbesondere Polygonverzahnungen. Dadurch ist eine zuverlässige Drehmomentübertragung gewährleistet. Nach Funktion und Wirkungswei e analog dazu ist auch das Aufnahmeteil AH1 selbst in der Aufnahmevorrichtung SV1 über formschlüssige Verbindungen in radialer und in Umfangsrichtung lagegesichert. Insbesondere durch Polygonverzahnung mit dem Verbindungsstück VK ist für das Aufnahmeteil AH1 eine im wesentlichen starre Verbindung auch in Drehrichtung zur festen Mitnahme sichergestellt.

Figur 4 zeigt die Aufnahmevorrichtung SV1 im Querschnitt bei einem Schnitt entlang der Linie IV-IV in Figur 2 im Bereich der Rastkugeln RK1 und RKm. Die Rastkugel RK1 in der oberen Bildhälfte von Figur 4 befindet sich in ihrer Arretierposition. Die queraxiale Verriegelung durch die Rastkugel RK1 wird dadurch bewirkt, daß der Rastring RR außen an der Rastkugel RK1 fest anliegt sowie die Rastkugel RK1 radial nach innen in der Rastnut RNU der Aufnahmehülse AH1 weitgehend spielfrei festsitzt. Eine Bewegung der Rastkugel RK1 in radialer Richtung ist somit nicht möglich. Genauso wenig kann sie sich in axialer Richtung LA (vgl. Figur 2) bewegen, da sie in der Durchgangsöffnung AK1 ohne seitliches Spiel in axialer Richtung LA (vgl. Figur 2) gehalten ist. Die Rastkugel RK1 ist also in der Rastnut RNU fest eingerastet und stellt eine queraxiale, insbesondere bezüglich der Verseilachse senkrechte, Sperre für das Aufnahmeteil AH1 in der Durchgangsöffnung des langgestreckten Verbindungsstücks VK dar.

Im Unterschied dazu zeigt die untere Bildhälfte von Figur 4 die Rastkugel RKm in ihrer Freigabestellung. Die Rastkugel RKm ragt jetzt nicht mehr in die Rastnut RNU hinein und wirkt somit auch nicht mehr länger als queraxiale Sperre. Sie läßt sich vielmehr beim Einführen oder Herausziehen des Aufnahmeteils AH1 in dessen etwa kreisringförmige Aufnahmenut bzw. Rückhaltekammer FR radial nach außen hin drücken, so daß sie nicht mehr in die Durchgangsöffnung des Verbindungsstücks VK hineinragt.

Figur 5 zeigt schließlich das Aufnahmeteil AH1 von Figur 2 im Querschnitt bei einem Schnitt entlang der Linie V-V im Bereich der Adapterscheibe AS. Die Adapter- bzw. Führungsscheibe AS ist ebenfalls mit Hilfe einer "Dreier-Polygonverzahnung" (entsprechend der Aufnahmehülse AH1 im Verbindungsstück VK (vgl. Figur 3) im Aufnahmeteil AH1 in Unfangs- sowie in radialer Richtung lagegesichert. Dadurch kann sie durch das Aufnahmeteil AH1 spielfrei, d.h. ohne Schlupf, in Drehrichtung mitgenommen und eine zuverlässige Drehmomentübertragung in Umfangsrichtung bei gleichzeitig stabiler Laufruhe sichergestellt werden.

Neben den in den Figuren 3 mit 5 erläuterten "Dreier"- und "Vierer"-Polygonverzahnungen sind selbstverständlich auch weitere formschlüssige Verbindungen zur Sicherung des Aufnahmeteils AH1, der Verseilscheibe VS, der Adapterscheibe AD, usw. in Umfangs- sowie in radialer Richtung möglich. Insbesondere eignen sich Polygonverzahnungen mit vielfälti gen Querschnittsformen wie z.B. "fünfeckiger", "sechseckiger", Kontur,usw., d.h. vorzugsweise vieleckigen Berandungen.

Figur 6 zeigt schließlich die eingangsseitige-Aufhängung des Speicherdrahts SD. Die Bezugszeichen von in Funktion und Wirkungsweise unverändert übernommenen Elementen aus den Figuren 1 mit 5 sind dabei zusätzlich mit einem Stern * gekennzeichnet. Der Speicherdraht SD wird in einem Drahtgegenlager DGL als eingangsseitige Aufhängevorrichtung über ein Lager LA4 in einer im Betrieb feststehenden Haltevorrichtung HV2 drehbar gehalten. Die Haltevorrichtung HV2 ist zum Spannen des Speicherdrahtes SD auf einer axial, d.h. parallel zur Verseilachse, verschiebbaren Spannvorrichtung GP feststehend montiert. Deren Verschiebbarkeit ist durch einen Doppelpfeil S in Figur 6 angedeutet. Das Drahtgegenlager DGL weist eine Aufnahmevorrichtung SV2 mit einem Aufnahmeteil AH2 für den Speicherdraht SD auf. Dieses Aufnahmeteil AH2 weist (entlang der Verseilachse in Durchlaufrichtung betrachtet) einen stirnseitigen, queraxial abstehenden Flansch bzw. Steg ST auf, der dem verbesserten Anfassen des Aufnahmeteils AH2 dient. Daran schließt sich ein im wesentlichen kreiszylinderförmiges Mittelteil ZT als Schaft an. Das Mittelteil MT geht ausgangsseitig in ein Klemmteil KT1 als Spitze über, das sich bezüglich seiner Außenkontur im wesentlichen konusförmig in Durchlaufrichtung verjüngt. Das "stopfenartige" bzw. "pfeilartige" Aufnahmeteil AH2 steckt mit seinem Mittelteil MT und seinem Klemmteil KT1 in dazu jeweils passend ausgeformten Endabschnitten der Durchgangsöffnung eines drehgelagerten Arretierteils TR4, insbesondere Tragrohrs, formschlüssig fest, so daß dort eine Art Kegelsitz zwischen dem Aufnahmeteil AH2 und dem Arretierteil TR4 bewirkt ist. Dabei stützt sich das Arretierteil TR4 mit einem ausgangsseitigem Lagerteil LT über das Lager LA4, insbesondere ein Ringkugellager, gegenüber der vorzugsweise flanschartigen Haltevorrichtung HV2 ab. Dieses Lagerteil LT weist zweckmäßigerweise eine kreiszylinderförmige Durchgangsöffnung mit derart großem Innendurchmesser auf, daß der Speicherdraht SD mit der ausgangsseitig fest daranhängenden Verseilscheibe VS zur Montage bzw. Demontage durch das Aufnahmeteil AH2 hindurchgefädelt bzw. hindurchgezogen werden kann. Das Aufnahmeteil AH2 ist somit durch ein Eingangsteil AT mit etwa kreiszylinderförmigen Durchlaß, einem sich daran in Durchlaufrichtung anschließenden Mittelteil KT2 mit einer sich konusförmig verjüngenden Durchgangsöffnung sowie dem danach folgenden Lagerteil LT gebildet. Der Innendurchmesser der Durchgangsöffnung im Lagerteil LT entspricht dabei etwa dem Innendurchmesser am Ausgang der kegelstumpfartigen Durchgangsöffnung des Mittelteils KT2.

Das Aufnahmeteil AH2 ist im Bereich seines Mittelteils ZT vorzugsweise mit Hilfe von Rastkugeln K1* mit Km* analog zum Verschlußmechanismus der ausgangsseitigen Aufhängevorrichtung SZV der Figuren 1 mit 5 im Arretierteil TR4 in axialer Richtung arretier- bzw. sperrbar. Dabei ist in der oberen Bildhälfte von Figur 6 die Freigabestellung, in der unteren Bildhälfte die Arretierstellung gezeigt. Die Rastkugeln K1* mit Km* sitzen dabei in Durchgangsöffnungen im Mantel des Arretierteils TR4. Sie werden vorzugsweise analog zur ausgangsseitigen Aufhängevorrichtung SZV mit Hilfe eines sie außen abdeckenden Rastringes ERR* von der Rückhaltekammer R* in eine ringförmige Rastnut NU* am Außenumfang des Aufnahmeteils AH2 unter der Federspannung einer Verschlußfeder F* teilweise gedrückt, so daß zwischen dem Arretierteil TR4 und dem Aufnahmeteil AH2 eine Querverbindung hergestellt ist. Da Aufbau und Wirkungsweise dieser eingangsseitigen, axialen Verschlußvorrichtung bevorzugt dem ausgangsseitigen Verschlußmechanismus der Figuren 1 mit 5 entsprechen, ist das Aufnahmeteil AH2 in axialer Richtung lösbar und damit aus dem Arretierteil TR4 zur Demontage herauszieh- oder zur Montage in das Arretierteil TR4 einführbar. Gegebenfalls ist eine entsprechende Modifikation der verschiedenen Verschlußelemente der Figuren 1 mit 5, wie z.B. der Rastkugeln, hinsichtlich ihrer Dimensionierung für die eingangsseitige Verwendung zweckmäßig. Auf diese Weise ist das Aufnahmeteil AH2 im Arretierteil TR4 auf folgende Arten lagegesichert:
- In axialer Richtung ist unter Zuhilfenahme der Rastkugeln K1* mit Km* ein queraxiales Arretiermittel für das Aufnahmeteil AH2 analog zum ausgangsseitigem Aufnahmeteil AH1 bereitgestellt. Somit ist in axialer bzw. Längs- Richtung eine starre Verbindung zwischen dem Arretierteil TR4 und dem Aufnahmeteil AH2 bewirkt.
- In Umfangsrichtung betrachtet ist zwischen dem konusförmigen Klemmteil KT1 des Aufnahmeteils AH2 und dem dazu passend ausgeformten Mittelteil KT2 des Arretierteils TR4 eine im wesentlichen formschlüssige Verbindung und damit Arretierung bewirkt. Die formschlüssige Verbindung kommt damit gewissermaßen einem Arretiermittel in Umfangsrichtung gleich. Da die Spannvorrichtung GP für den Betrieb der Verseileinrichtung, d.h. zur Spannung des Speicherdrahtes SD vorzugsweise in eine Position verfahren wird, die von der feststehenden ausgangsseitigen Aufhängevorrichtung SZV weiter entfernt ist als im Montagezustand, wird nämlich das Klemmteil KT1 in das dazu passend konusförmig ausgeformte Mittelteil KT2 eingepreßt bzw. eingeklemmt. Es sitzt somit paßförmig, d.h. durch Klemm-, insbesondere Kegelsitz, formschlüssig im Arretierteil TR4 fest. Auf diese Weise ist das Aufnahmeteil AH2 im Arretierteil TR4 verdrehgesichert. Im Betrieb ist somit für das Aufnahmeteil AH2 eine im wesentlichen schlupfarme, möglichst starre Ankopplung und feste Mitnahme in Umfangsrichtung durch das sich das drehende Arretierteil TR4 weitgehend sichergestellt.
- In radialer Richtung ist das Aufnahmeteil AH2 durch den Kegelsitz, d.h. seine formschlüssige Verbindung mit dem Arretierteil TR4, arretiert bzw. lagegesichert. Dadurch sind vorzugsweise Unwuchten auf die eingangsseitige Aufhängevorrichtung DGL und daraus etwaig resultierende, unzulässige Schwingungen des Speicherdrahtes SD weitgehend vermieden. Auf diese Weise ist ein im wesentlichen schwingungsarmer, stabiler Lauf der Verseileinrichtung sichergestellt. Die formschlüssige Verbindung kommt hierbei insbesondere einem Arretiermittel in radialer Richtung gleich.
- Der "Kegelsitz" zwischen dem Aufnahmeteil AH2 und dem Arretierteil TR4 verhilft zudem unabhängig oder ergänzend zu den queraxial wirkenden Rastkugeln K1* mit Km* zu einer axialen Lagesicherung des Aufnahmeteils AH2, da beim Spannen des Speicherdrahtes SD das Aufnahmeteil AH2 in das Arretierteil TR4 weiter hineingezogen und durch Gegendruck dort auch in Längsrichtung arretiert wird. Das Klemmteil KT1 des Aufnahmeteils AH2 verkeilt sich dabei im konusförmig ausgebohrten Mittelteil KT2 des Arretierteils TR4.

Alternativ zu diesem "Klemmsitz" sind auch sonstige formschlüssige Verbindungen zwischen dem Aufnahmeteil AH2 und dem Arretierteil TR4 zweckmäßig, die deren einfache Lösbarkeit voneinander in axialer Richtung für die Montage oder Demontage sicherstellen. So kann beispielsweise zwischen dem Aufnahmeteil AH2 und dem Arretierteil TR4 ggf. auch eine polygonartige Verzahnung wie zwischen dem ausgangsseitigen Aufnahmeteil AH1 und dessem zugehörigen Verbindungsteil VK zweckmäßig sein.

Das Aufnahmeteil AH2 selbst ist vorzugsweise teilbar ausgebildet, so daß in seine frei zugänglich machbare Durchgangsöffnung der Speicherdraht SD eingesetzt werden kann. Der Speicherdraht SD ist im Bereich seines eingangsseitigen Endes vorzugsweise mit einer sich konusförmig verjüngenden Aufdickung ADI versehen, mit der er in den dazu passenden Endabschnitt der Durchgangsöffnung des Aufnahmeteils AH2 formschlüssig, d.h. festgeklemmt festsitzt, so daß eine Art Kegelsitz für den Speicherdraht SD ebenfalls bewirkt ist. Die Aufdickung ADI kann z.B. durch Aufstecken und Ankleben eines leicht konischen Endstücks bzw. einer Hülse (, insbesondere aus Metall, ) mit einer Durchgangsbohrung für den Speicherdraht SD gebildet sein. Derartig am eingangsseitigen Ende präparierte Speicherdrähte sind zweckmäßigerweise vorrätig zu halten. Sie sind besonders schnell im Aufnahmeteil AH1 und damit in der Aufnahmevorrichtung SV2 aufzuhängen und bequem sowie einfach auszuwechseln. Zusätzlich oder unabhängig hiervon kann der Speicherdraht SD gegebenenfalls an seinem stirnseitigen Ende mit einem queraxialen Endstück bzw. Steg ES versehen sein, der in eine Ringnut am Innenrand der Durchgangsöffnung des Aufnahmeteils als queraxiale Sperre eingreift. Durch diese queraxiale Sperre und/oder insbesondere durch die " kegelsitzige " Verbindung zwischen der Aufdickung ADI des Speicherdrahtes SD und dem Aufnahmeteil AH2 ist eine starre Ankopplung des Speicherdrahtes SD an das Aufnahmeteil AH2 und damit eine zuverlässige Drehmomentenübertragung ermöglicht. Gleichzeitig ist der Speicherdraht SD zusammen, d.h. gemeinsam mit dem Aufnahmeteil aus der Aufnahmevorrichtung SV2 herausnehmbar und neu einsetzbar. Damit ist ein schneller Wechsel der Verseilkomponenten ermöglicht.

Gegebenfalls kann es auch zweckmäßig sein, den Speicherdraht SD im Aufnahmeteil AH2 durch Klebeverbindungen oder sonstige stoffschlüssige Verbindungen fest unterzubringen, d.h. lagezusichern. Solche endseitig bestückten Speicherdrähte sind vorzugsweise vorrätig zu halten, da sie besonders schnell an der endlaufseitigen Aufhängevorrichtung montierbar sind. (Ein Einlegen in das Aufnahmeteil entfällt dann.)

Insgesamt betrachtet ergibt sich durch das axial lösbare eingangsseitige und/oder ausgangsseitige Aufnahmeteil überhaupt erst die Möglichkeit, weitgehend ungehindert an die Verseilkomponenten, wie zum Beispiel die Verseilscheibe, die Adapterscheibe, den Speicherdraht, usw. der Verseileinrichtung zur Montage oder Demontage heranzukommen. Dadurch ist ein gemeinsamer Austausch der jeweiligen Verseilkomponenten der eingangs- und/oder ausgangsseitigen Aufhängevorrichtung ermöglicht. Es ist insbesondere eingangs- und/oder ausgangsseitig ein Schnellverschluß gebildet, der im Betrieb die Verseilkomponenten in der eingangs- und/oder ausgangsseitigen Aufhängevorrichtung lagesichert, gleichzeitig im Montagefall jedoch ein schnelles sowie einfaches Lösen und Wechseln der Verseilkomponenten erlaubt.

Die erfindungsgemäße eingangsseitige und/oder ausgangsseitige Aufhängevorrichtung eignet sich vorteilhaft auch für Gleichschlag- Verseilmaschinen, die einen Speicherdraht einsetzen.

Im folgenden wird vorzugsweise auf die Figuren 1 mit 6 sowie auf die dazu getroffenen Aussagen Bezug genommen. Unverändert übernommene Elemente sind dabei jeweils mit den gleichen Bezugszeichen versehen.

Bei Verseilmaschinen, die -vorzugsweise für die SZ-Verseiltechnik- mit einem langgestreckten, rotierenden Speicherdraht arbeiten, kann deren Rüstvorgang mit Verseilkomponenten, wie z.B. einer Verseilscheibe, Verseilelementen, Adapterscheiben, usw. ..., ggf. erschwert sein.

Einer Weiterbildung der Erfindung liegt insbesondere die Aufgabe zugrunde, einen Weg aufzuzeigen, wie die Verseilkomponenten einer Verseileinrichtung in einfacher Weise gewechselt werden können. Dies wird dadurch gelöst, daß in Durchlaufrichtung betrachtet vor der einlaufseitigen und/oder nach der ausgangsseitigen Aufhängevorrichtung zusätzlich mindestens eine Ablegevorrichtung zur Aufnahme des Speicherdrahtes vorgesehen ist.

Diese Weiterbildung zeichnet sich vor allem dadurch aus, daß durch die zusätzliche Bereitstellung einer Ablegevorrichtung für den langgestreckten Speicherdraht endseitig von dessen eingangs- und/oder ausgangsseitiger Aufhängevorrichtung der Rüstvorgang einer solchen Verseileinrichtung in vorteilhafter Weise erleichtert ist. Denn die Ablegevorrichtung nimmt den Speicherdraht für die Montage auf, so daß die eingangs- und/oder ausgangsseitige Aufhängevorrichtung sowie die eigentliche Speicherstrecke zwischen der eingangs- sowie ausgangsseitigen Aufhängevorrichtung frei zugänglich sind. Dies verbessert nicht unwesentlich die Handhabbarkeit der Verseileinrichtung. So können die Verseilkomponenten, wie zum Beispiel die Verseilscheibe, Adapterscheibe(n), Führungsscheibe(n), der Speicherdraht, die Verseilelemente, sowie sonstige Bauteile der Verseileinrichtung ohne allzu großen Aufwand sowie weitgehend ohne Behinderungen gewechselt werden. Dies spielt insbesondere eine nicht unerhebliche Rolle, z.B. bei einem Ende der Lauflängen der Verseilelemente, einem Produktwechsel, Maschinenstörungen, Verschleiß- oder Wartungsarbeiten an der Verseileinrichtung, da der Speicherdraht in kurzen Montagezeiten ausgetauscht bzw. ausgewechselt und die Verseilelemente besonders zuverlässig, das heißt verwechslungsfrei zur Verseilscheibe wieder eingezogen werden können. Auf diese Weise ist vorteilhaft also eine Art Schnellwechselsystem gebildet, das nicht mehr erfordert, jedes einzelne Verseilelement über die gesamte Speicherstrecke einzeln von Hand wie z.B. bei einem gekapselten Rohrspeicher einzufädeln.

Figur 7 zeigt vom Konzept her schematisch den Gesamtaufbau einer erfindungsgemäßen Verseileinrichtung VER vorzugsweise mit einer eingangsseitigen Aufhängevorrichtung DGL gemäß Figur 6 sowie einer ausgangsseitigen Aufhängevorrichtung SZV gemäß den Figuren 1 mit 5. In der Figur 7 sind von mehreren, konzentrisch um eine Verseilachse LA angeordneten Vorratsspulen VS1 mit VSn der Übersichtlichkeit halber nur zwei, nämlich die Vorratsspulen VS1 und VSn dargestellt. Diese Vorratsspulen VS1 mit VSn enthalten die langgestreckten Verseilelemente VE1 mit VEn. Diese werden über entsprechende, hier der Übersichtlichkeit halber ebenfalls nicht dargestellte Abzugseinrichtungen einer feststehenden Einlaufvorrichtung FS, insbesondere einer Führungsscheibe mit einer Reihe von über den Umfang verteilten Bohrungen (in der Art eines Lochkranzes), zugeführt. Als Verseilelemente kommen vorzugsweise elektrische und/oder optische Übertragungselemente unterschiedlicher Größen, Formen und Aufbauten in Frage. Dies können beispielsweise elektrische Leiter (Adern), elektrische Bandleitungen, optische Leiter (wie zum Beispiel Lichtwellenleiter, Hohladern, Bündeladern), Lichtwellenleiter-Bändchen, Lichtwellenleiter-Bändchenstapel, U-Profilelemente mit Lichtwellenleitern, sowie weitere Arten runder sowie nichtrunder Verseilelemente sein. Die vorzugsweise runden Durchgangsbohrungen dieser Einlaufvorrichtung FS im Bereich des einlaufseitigen Endes der SZ-Verseileinrichtung VER dienen als Führungen für die jeweiligen Verseilelemente VE1 mit VEn. In der Praxis ist eine größere Anzahl, zum Beispiel zwischen n = 2 bis n = 20 oder mehr derartiger Verseilelemente vorgesehen.

Im Betrieb erfolgt die Verseilung dieser Verseilelemente mit Hilfe des langgestreckten, geradlinig verlaufenden, vorzugsweise gespannten Speicherdrahtes SD, der in wechselnde Drehrichtung versetzt wird (SZ-Verseilung), wodurch es zu einer Umschlingung der Verseilelemente am Außenumfang, d.h. auf der glatten Oberfläche des geradlinig verlaufenden Speicherdrahtes SD kommt.

Der Speicherkörper SD ist drehbar in der feststehenden Einlaufvorrichtung FS gelagert. Natürlich können auch weitere hier nicht näher dargestellte Lager entlang der Speicherstrecke des Speicherdrahtes SD vorgesehen sein.

Der Einfachheit halber ist im Verlauf des Speicherkörpers SD nur noch das Verseilelement VE1 dargestellt. Für die anderen Verseilelemente gilt vorzugsweise sinngemäß dieselbe Art von Umschlingung. Am ausgangsseitigen, rechten Ende des Speicherkörpers SD ist eine Verseilscheibe VS vorzugsweise in der Aufhängevorrichtung SZV gemäß den Figuren 1 mit 5 vorgesehen. Die Verseilscheibe VS sitzt dort auf dem Speicherdraht SD Speicherdraht SD zweckmäßigerweise fest auf, d.h. sie ist vorzugsweise mit ihm fest verbunden. Die Verseilscheibe VS ist über den Zahnriemen ZRS mit Hilfe des Motors MO1 enstprechen Figur 1 angetrieben. Auf diese Weise ist die Verseilscheibe VS synchron zum Speicherkörper SD in Rotation versetzt. Die Verseilscheibe VS weist eine Reihe von Bohrungen in der Art eines Lochkranzes auf, in denen jeweils einzeln die Verseilelemente VE1 mit VEn geführt sind. Nach dem Verlassen des Speicherkörpers SD gelangen die Verseilelemente zu dem der ausgangsseitigen Verseileinrichtung SZV nachgeordneten Verseilnippel VN. In diesem Verseilnippel VN werden die Verseilelemente VE1 mit VEn zu einem Bündel VB zusammengefaßt und in Abzugsrichtung bzw. entlang der gedachte Verlängerung der Verseilachse LA weiteren, hier nicht dargestellten Verarbeitungseinrichtungen wie zum Beispiel einem Haltewendelspinner, einer Torsionssperrvorrichtung, Abzugseinrichtung usw., zugeführt.

Vorzugsweise ist die Verseilscheibe VS zusammen mit weiteren Verseilkomponenten wie zum Beispiel einer Adapterscheibe, den Verseilelementen, usw. am auslaufseitigen Ende des Speicherdrahtes SD angebracht, so daß eine erfindungsgemäße ausgangsseitige Aufhängevorrichtung SZV wie in den Figuren 1 mit 5 gebildet ist.

Zur SZ-Verseilung ist der Speicherdraht SD vorzugsweise unter einer axialen Zugspannung ZF gehalten. Dazu sind am einlaufseitigen Ende des Speicherdrahtes SD Mittel zur Erzeugung der axialen Vorspannung ZF vorgesehen. Die Erzeugung der Zugspannung ZF ist schematisch durch ein vorgespanntes Federpaar FE angedeutet. Dieses Federpaar FE ist an seinem äußeren, dem Speicherdraht SD abgewandten Ende fest in einem Gegenlager GL1 gehalten. Das einlaufseitige Ende des Speicherkörpers SD ist in einem Drahtgegenlager, insbesondere einem Ringkugellager, Axiallager oder dergleichen, drehbar aufgehängt. Bevorzugt ist es entsprechend der eingangsseitigen Aufhängevorrichtung DGL von Figur 6 ausgebildet. Das Federpaar FE überträgt seine Zugkraft in Gegenrichtung ZF zur Abzugsrichtung AR auf den Speicherkörper SD, indem es mit Rückhaltemitteln RM, insbesondere Halteflansche bzw. Backen, das Gegenlager bzw. die eingangsseitige Aufhängevorrichtung DGL hintergreift.

Am anderen Ende des Speicherkörpers SD ist im Bereich der Verseilscheibe VS ein axiales Gegenlager GL2 feststehend vorgesehen. Dieses Gegenlager GL2 kann beispielsweise dadurch gebildet sein, daß sich die Verseilscheibe VS in ihrem Außenbereich über Gleitlager gegen einen ortsfesten Lagerbock axial abstützt. Eine derartige Aufhängung des Speicherdrahtes SD wird ausgangsseitig vorzugsweise mit der Aufhängevorrichtung SZV nach den Figuren 1 mit 5 erreicht. Durch diese Aufhängung des Speicherdrahtes SD kann auf ihn ein durchgehender, axialer Zug ausgeübt werden, so daß er im Betrieb mit einer gewünschten, definierten axialen Zugspannung beaufschlagt ist. Dabei bilden die Lager (GL1, DGL sowie GL2) die wesentlichen Komponenten einer eingangs- und/oder ausgangsseitigen Aufhängevorrichtung für den Speicherkörper SD.

Selbstverständlich ist es auch möglich, das Federpaar FE drehbar im einlaufseitigen Gegenlager GL1 aufzuhängen. Zweckmäßig kann es auch sein, im Bereich der Einlaufvorrichtung FS einen weiteren Antriebsmotor MO3 vorzusehen, der über einen Zahnriemen ZR3 ein Zahnrad ZD3 antreibt, das ebenfalls wie das Zahnrad der Verseilscheibe VS fest mit dem Speicherkörper SD verbunden ist.

Die axiale Zugspannung kann vorzugsweise dadurch einstellbar gehalten werden, daß die Axiallager GL1 bzw. GL2 entsprechend ausgelegt werden sowie bevorzugt die beiden Motoren MO1 bzw. MO2 nicht synchron angetrieben werden. Durch diese Maßnahme ist es vorteilhaft ermöglicht, dem Speicherelement SD gegebenenfalls eine torsionale Spannung aufzuprägen, das heißt das Speicherelement wirkt in der von den Lagern, wie z.B. GL1, GL2 gebildeten Aufhängung als eine Art Torsionsstab, d.h. selbst als Federelement. Für diese Betriebsart ist für das Speicherelement SD vorzugsweise ein torsionselastisches Material gewählt.

Durch die axiale Vorspannung des Speicherdrahtes SD sind sich etwaig einstellende, radiale Auslenkungen verringert. Dadurch ist es ermöglicht, Speicherdrähte mit einer größeren Baulänge, das heißt Speicherstrecke zu realisieren. Durch die Streckung bzw. Spannung des Speicherdrahtes SD ist dessen Schwingungsverhalten wesentlich verbessert. Aufgrund der Stabilisierung der Laufruhe des Speicherdrahtes SD ist normalerweise eine zusätzliche äußere Abdeckung des Speicherkörpers SD nicht erforderlich. Gegebenenfalls kann es allerdings zweckmäßig sein, zusätzlich einzelne Führungsringe, wie zum Beispiel FR1, FR2, jeweils an lokalen, einzelnen Stellen des Speicherkörpers SD anzubringen, um ein Überschlagen der Verseilelemente VE1 mit VEn besonders zuverlässig zu vermeiden.

Aufgrund der Aufhängung des Speicherkörpers SD in den beiden Aufhängevorrichtungen DGL bzw. SZV am einlauf- bzw. ausgangsseitigen Ende des Speicherdrahtes SD kann in der Praxis der Rüstvorgang für die erfindungsgemäße Verseileinrichtung VER ggf. erschwert sein. Um einen leichteren Zugang zur Speicherstrecke, insbesondere im Bereich der Verseilscheibe VS sowie der Einlaufvorrichtung FS zu bekommen, ist eingangsseitig vor der Aufhängevorrichtung DGL des Speicherdrahtes SD, insbesondere dem Gegenlager GL1, zusätzlich eine Ablegevorrichtung AV für den Speicherdraht SD vorgesehen. In diese wird der Speicherdraht SD entgegen der Abzugsrichtung LA eingezogen, so daß dessen Speicherstrecke bzw. die Verseileinrichtung VER im wesentlichen frei zugänglich wird. Die Ablegevorrichtung AV ist vorzugsweise durch eine Aufwickeltrommel Dzw. Aufwickelspule gebildet, auf die der Speicherdraht SD in eine Montagestellung aufwickelbar ist. Zur Aufwicklung wird der Speicherdraht SD zweckmäßigerweise bezüglich seiner axialen Verriegelung in den Aufhängevorrichtungen DGL, SZV gelöst und in Richtung EZ entgegen der Abzugsrichtung LA aus den Aufhängevorrichtungen DGL, SZV axial herausgezogen sowie in der Ablegevorrichtung AV untergebracht. Insbesondere wird der Speicherdraht SD nur soweit aus der Verseileinrichtung VER herausgezogen und auf die eingangsseitige Ablegevorrichtung AV aufgewickelt, daß sich sein ausgangsseitiges Ende mit der Verseilscheibe VS in Durchlaufrichtung LA betrachtet unmittelbar hinter dem Drahtgegenlager DGL befindet. Dies ist vorzugsweise bei einem gelagerten Arretierteil des Drahtgegenlagers DGL, wie z.B. TR4 von Figur 6, mit einem Innendurchgang der Fall, dessen Innendurchmesser kleiner als der Außendurchmesser der Verseilscheibe VS gewählt ist, um das Massenträgheitsmoment für das durch den Speicherdraht SD angetriebene Arretierteil TR4 von Figur 6 möglichst gering zu halten. Durch das Ablegen, insbesondere Aufspulen, des Speicherdrahtes SD in der Ablegevorrichtung AV, ist während der Montage eine sichere Verwahrung des Speicherdrahtes SD weitgehend sichergestellt. Der relativ dünne, gegenüber gängigen Rohrspeichern empfindlichere Speicherdraht SD kann somit z.B. nicht zu Boden fallen und dabei vorzugsweise seine glatte Oberfläche beschädigt werden. Um diesen Aufnahmevorgang besonders einfach durchführen zu können, weist die Ablegevorrichtung AV zweckmäßigerweise eine Standhöhe D auf, die etwa der Lagehöhe des Speicherdrahtes SD in den Aufhängevorrichtungen DGL, SZV entspricht. Insbesondere ist die Standhöhe D kleiner gleich der Mittenhöhe der jeweiligen Aufhängevorrichtung DGL, SZV sowie größer gleich dem etwa 50fachen des Speicherdraht-Durchmessers gewählt. Bei Verwendung einer Aufwickeltrommel als Ablegevorrichtung AV weist diese vorzugsweise einen Scheibendurchmesser zwischen dem 10- und 100fachen, insbesondere zwischen dem 5- und 50fachen, des Speicherdraht-Durchmessers auf. Derartigen Aufwickeltrommeln kann vorzugsweise ein eigener Motor MO4 zugeordnet sein, so daß der Speicherdraht SD automatisch bzw. selbsttätig in seine Montagestellung ZKA eingebracht werden kann. Der Aufspulprozeß für den Speicherdraht SD ist dabei durch einen Rotationspfeil RP angedeutet.

Auf diese Weise ist der Speicherdraht SD zwischen den beiden Aufhängevorrichtungen DGL, SZV für eine Bedienperson frei zugänglich. Z.B. bei einem Ende der Lauflängen oder einem Produktwechsel der Verseilelemente VE1 mit VEn, Maschinenstörungen, Verschleiß- oder Wartungsarbeiten an der Verseileinrichtung VER, einem Wechsel des Speicherdrahtes SD oder einem Wechsel weiterer Verseilkomponenten der Anlage, wie zum Beispiel Adapterscheiben , Führungsringe, usw. kann eine Bedienperson unbehindert an die wesentlichen Komponenten der Verseileinrichtung VER gelangen. Insbesondere können neue Verseilelemente VE1 mit VEn verwechslungs- und überkreuzungsfrei in die jeweils zugeordneten Durchgangsbohrungen der Einlaufvorrichtung FS und/oder der Verseilscheibe VS, und/oder einer etwaig vorhandenen Adapterscheibe eingeführt und entlang der Verseilstrecke des Speicherdrahtes SD eingezogen werden. Nach Ende des Einziehvorganges der Verseilelemente VE1 mit VEn wird der Speicherdraht SD von der Ablegevorrichtung AV in Abzugsrichtung LA abgezogen, zwischen der eingangs- sowie ausgangsseitigen Aufhängevorrichtung DGL, SZV axialer Richtung gestreckt positioniert und dort unter Zugspannung fixiert. Nach Ende dieses Einziehvorganges verbleibt die Ablegevorrichtung AV in ihrer Position einlaufseitig vor der Aufhängevorrichtung DGL positioniert, wobei sie die Funktion der Verseileinrichtung nicht behindert. Ggf. kann die Ablegevorrichtung AV auch weggeschoben werden.

Zweckmäßig kann es ggf. sein, verschiedene Arten von Speicherdrähten, z.B. mit unterschiedlichen Durchmessern sowie Längen, einlaufseitig in mehreren, d.h. in mehr als einer Ablegevorrichtungen magazinartig bereitzuhalten, die dann bei Bedarf einen schnellen Wechsel des Speicherdrahtes erlauben. Insbesondere sind mehrere solcher Ablegevorrichtungen parallel nebeneinander einagangsseitig angeordnet. Dabei können diese Speicherdrähte bevorzugt, wie zu den Figuren 1 mit 6 beschrieben, endseitig präpariert sein.

Zusätzlich oder unabhängig zur einlaufseitigen Positionierung mindestens einer Ablegevorrichtung AV vor der Aufhängevorrichtung DGL für den Speicherkörper SD, kann es auch zweckmäßig sein, eine Ablegevorrichtung am anderen, ausgangs- bzw. auslaufseitigen Ende nach der Aufhängevorrichtung SZV im Bereich des Verseilnippels VN zur Aufnahme des Speicherkörpers SD vorzusehen. Für eine derartig positionierte Ablegevorrichtung gelten dann die zur eingangsseitigen Ablegevorrichtung AV getroffenen Aussagen analog. Der Übersichtlichkeit halber ist eine derartig ausgangsseitig angeordnete Ablegevorrichtung in der Figur 7 weggelassen worden. Der Speicherdraht SD kann dann für Montagearbeiten an der Verseileinrichtung VER in Abzugsrichtung LA auf mindestens eine derartige, ausgangsseitige Ablegevorrichtung zu abgezogen und dort vorrätig gehalten werden.

Um den Einziehvorgang für die Verseilelemente VE1 mit VEn bzw. des Speicherkörpers SD weiter zu erleichtern, kann es zweckmäßig sein, die feststehenden Führungsringe FR1 bzw. FR2 teil- bzw. aufklappbar zu gestalten, so daß eine Durchführung des Speicherdrahtes SD sowie der Verseilelemente VE1 mit VEn in besonders einfacher Weise ermöglicht ist.

Weiterhin ist es auch möglich, mit Hilfe der erfindungsgemäßen Verseileinrichtung VER eine Gleichschlagverseilung oder sonstige Verseilungsarten durchzuführen. Bei einer Gleichschlagverseilung wird im Unterschied zur SZ-Verseilung der Speicherdraht SD jeweils nur in ein- und dieselbe Verdrehrichtung in Rotation versetzt. Dazu ist der Speicherdraht SD zweckmäßigerweise beidseitig drehbar gelagert sowie jeweils synchron rotierend angetrieben.

Folgende Schritte werden zum Austausch der Verseilkomponenten zweckmäßigerweise durchgeführt:
- Die Spannvorrichtung GP von Figur 6 befindet sich vor dem Einsetzen des Aufnahmeteils AH2 in das Arretierteil TR4 der eingangsseitigen Aufhängevorrichtung DGL zunächst in einer Position, die in Durchlaufrichtung LA verschoben näher bei der ausgangsseitigen Aufhängevorrichtung SZV liegt.

1. Der Speicherdraht SD wird mit seinem eingangsseitigen Ende, das vorzugsweise die Aufdickung ADI von Figur 6 aufweist, entgegen der Durchlaufrichtung LA durch die Durchgangsöffnung des Arretierteils TR4 des Drahtgegenlagers DGL von Figur 6 hindurchgeführt.
2. Das aufgedickte Endstück ADI des Speicherdrahtes SD wird in das geöffnete, eingangsseitige Aufnahmeteil AH2 von Figur 6 eingelegt und dort lagegesichert.
3. Die beiden Hälften des teilbaren Aufnahmeteils AH2 von Figur 6 werden zusammengefügt und in das Arretierteil TR4 der eingangsseitigen Aufhängevorrichtung DGL von Figur 6 eingesteckt und dort mit Arretiermitteln wie z.B. den Rastkugeln K1* mit Km* lagegesichert.
4. Die Verseilelemente VE1 mit VEn werden durch die Durchgangsöffnungen der Einlaufvorrichtung FS von Figur 7 hindurchgezogen und durch die Durchgangsöffnungen der Verseilscheibe VS hindurchgefädelt sowie an der Verseilscheibe VS z.B. mit Klebebandstreifen kurzfristig befestigt.
5. In diesem entspannten Zustand wird der Speicherdraht SD mit der an seinem ausgangsseitigen Ende angebrachten Verseilscheibe VS zusammen mit den Verseilelementen VE1 mit VEn ausgangsseitig durch den durchbohrten Motor MO1 sowie durch das Tragrohr TR1 der ausgangsseitigen Aufhängevorrichtung SZV hindurchgezogen.
6. Die Verseilscheibe VS mit dem an ihr befestigten Speicherdraht SD wird zusammen mit einer etwaigen Adapterscheibe AS und/oder weiteren Verseilkomponenten in das geöffnete, gemeinsame Aufnahmeteil AH1 eingesetzt. Dazu befindet sich das Aufnahmeteil AH1 außerhalb der Aufhängevorrichtung SZV. Dabei werden die Verseilelemente VE1 mit VEn von der Verseilscheibe VS weiter durch die Durchgangsbohrungen der Adapterscheibe AS hindurchgezogen.
7. Die beiden Hälften des Aufnahmeteils AH1 werden aufeinandergelegt, d.h. zusammengefügt, und das Aufnahmeteil AH1 im Verbindungsstück VK der ausgangsseitigen Aufhängevorrichtung SZV von Figur 1 mittels Arretiermitteln wie z.B. den Rastkugeln RK1 mit RKm zur Lagesicherung arretiert.
8. Schließlich wird der Speicherdraht SD gespannt, indem die Spannvorrichtung GP von Figur 6 entgegen der Durchlaufrichtung LA verfahren wird, d.h. von ihrer Montageposition weg in eine von der ausgangsseitigen Aufhängevorrichtung SZV weiter entfernte Spannposition bewegt wird.

Bei entsprechend groß gewählten Innendurchmessern der Aufhängevorrichtungen kann es auch zweckmäßig sein, den Speicherdraht SD mit der an seinem ausgangsseitigen Ende befestigten Verseilscheibe VS und/oder seiner am eingangsseitigen Ende angebrachten Aufdickung ADI von einer eingangsseitigen Ablegevorrichtung, insbesondere Vorratsspule, wie z.B. AV in Figur 7, abzurollen und in Durchlaufrichtung LA durch die eingangsseitige Aufhängevorrichtung DGL sowie die ausgangsseitige Aufhängevorrichtung SZV hindurchzuziehen. Die jeweilig endseitige Aufhängung erfolgt dann im weiteren zweckmäßigerweise analog zu den obigen Schritten 2 mit 7.

Für die Montage an der Speicherdraht- Verseileinrichtung VER von Figur 7 wird der Speicherdraht SD vorzugsweise auf der Ablegevorrichtung AV, insbesondere Vorratsspule, verwahrt, wobei die obigen Schritte zweckmäßigerweise in umgekehrter Reihenfolge durchgeführt werden.

## Patentansprüche

1. Einrichtung zum Verseilen langgestreckter Verseilelemente (VE1 mit VEn) unter Verwendung eines sich axial erstreckenden Speicherkörpers (SD), über den die Verseilelemente (VE1 mit VEn) in axialer Richtung (LA) einer Verseilscheibe (VS) zugeführt sind, und dessen in axialer Richtung (LA) betrachtet eingangs- und ausgangsseitiges Ende jeweils im Aufnahmeteil (AH2, AH1) einer Aufhängevorrichtung (DGL, SZV) gehalten ist,
**dadurch gekennzeichnet,**
daß das jeweilige Aufnahmeteil (AH2, AH1) in der eingangs- und ausgangsseitigen Aufhängevorrichtung (DGL, SZV) mit Hilfe von Arretiermitteln (K1* mit Km*, RK1 mit RKm) angebracht ist, die in einer Freigabestellung das jeweilige Aufnahmeteil (AH2, AH1) zum Ein- oder Ausbau des Speicherkörpers (SD) in axialer Richtung (LA) als Ganzes verschieben lassen und in einer Arretierstellung gegen ungewolltes Lösen im Betrieb lagesichern.

2. Einrichtung nach Anspruch 1,
**dadurch gekennzeichnet,**
daß als Speicherkörper (SD) ein Speicherdraht vorgesehen ist.

3. Einrichtung nach einem der vorhergehenden Ansprüche,
**dadurch gekennzeichnet,**
daß die eingangs- und/oder ausgangsseitige Aufhängevorrichtung (DGL, SZV) jeweils Mittel (z.B. AH2 in Figur 6; HT1, HT2 in Figur 2) zum axialen Vorspannen des Speicherkörpers (SD) aufweist.

4. Einrichtung nach einem der vorhergehenden Ansprüche,
**dadurch gekennzeichnet,**
daß im ausgangsseitigen Aufnahmeteil (AH1) der Speicherkörper (SD) und die Verseilscheibe (VS) gemeinsam untergebracht sind.

5. Einrichtung nach einem der vorhergehenden Ansprüche,
**dadurch gekennzeichnet,**
daß der Speicherkörper (SD) an einem seiner Enden mit der Verseilscheibe (VS) fest verbunden ist.

6. Einrichtung nach einem der vorhergehenden Ansprüche,
**dadurch gekennzeichnet,**
daß im jeweiligen Aufnahmeteil (AH1, AH2) weitere Verseilkomponenten vorgesehen sind.

7. Einrichtung nach Anspruch 6,
**dadurch gekennzeichnet,**
daß als weitere Verseilkomponenten Adapterscheiben (AS), Verseilnippel oder dergleichen vorgesehen sind.

8. Einrichtung nach einem der vorhergehenden Ansprüche,
**dadurch gekennzeichnet,**
daß die jeweilige Aufhängevorrichtung (DGL, ZSV) als Arretiermittel zur axialen Sicherung ihres Aufnahmeteils (AH2, AH1) Rastkugeln (RK1 mit RKm) aufweist, die in eine zugehörige Rastnut (RNU) des Aufnahmeteils (AH2, AH1) queraxial einrastbar sind.

9. Einrichtung nach einem der vorhergehenden Ansprüche,
**dadurch gekennzeichnet,**
daß die jeweilige Aufhängevorrichtung (DGL, SZV) als Arretiermittel zur Sicherung ihres Aufnahmeteils (AH2, AH1) in Umfangsrichtung formschlüssige Verbindungen aufweist.

10. Einrichtung nach Anspruch 9,
**dadurch gekennzeichnet,**
daß die formschlüssige Verbindung durch Polygonverzahnung zwischen dem Aufnahmeteil (AH1, AH2) und seiner Aufhängevorrichtung (SZV, DGL) bewirkt ist.

11. Einrichtung nach einem der Ansprüche 9 oder 10,
**dadurch gekennzeichnet,**
daß die formschlüssige Verbindung durch einen Kegelsitz zwischen dem jeweiligen Aufnahmeteil (SV2) und seiner Aufhängevorrichtung (DGL) bewirkt ist.

12. Einrichtung nach einem der vorhergehenden Ansprüche,
**dadurch gekennzeichnet,**
daß das jeweilige Aufnahmeteil (SV1, SV2) teilbar ausgebildet ist.

13. Einrichtung nach einem der vorhergehenden Ansprüche,
**dadurch gekennzeichnet,**
daß die Verseilscheibe (VS) und/oder weitere Verseilkomponenten (AS) im jeweiligen Aufnahmeteil ( AH1, AH2) durch formschlüssige Verbindungen in Umfangsrichtung lagegesichert sind.

14. Einrichtung nach einem der vorhergehenden Ansprüche,
**dadurch gekennzeichnet,**
daß dem Speicherkörper (SD) und der Verseilscheibe (VS) eine gemeinsame Antriebseinrichtung (MO1) zugeordnet ist.

15. Einrichtung nach einem der Ansprüche 1 bis 13,
**dadurch gekennzeichnet,**
daß dem Speicherkörper (SD) und der Verseilscheibe (VS) getrennte Antriebseinrichtungen zugeordnet sind.

16. Einrichtung nach einem der Ansprüche 14 oder 15,
**dadurch gekennzeichnet,**
daß die jeweilige Antriebseinrichtung (MO1) durch einen im Zentrum durchgebohrten Motor gebildet ist, durch dessen Durchgangsöffnung der Speicherkörper (SD) zusammen mit den Verseilelementen (VE1 mit VEn) hindurchgeführt ist.

17. Einrichtung nach einem der vorhergehenden Ansprüche,
**dadurch gekennzeichnet,**
daß der Speicherkörper (SD) zwischen der eingangs- und ausgangsseitigen Aufhängevorrichtung (DGL, SZV) im wesentlichen frei zugänglich ist.

18. Einrichtung nach einem der vorhergehenden Ansprüche,
**dadurch gekennzeichnet,**
daß der ausgangsseitigen Aufhängevorrichtung (SZV) eine Wickeleinrichtung (HWV) zugeordnet ist.

19. Einrichtung nach einem der vorhergehenden Ansprüche,
**dadurch gekennzeichnet,**
daß als Verseilelemente (VE1 mit VEn) elektrische und/oder optische Übertragungselemente gewählt sind.

20. Einrichtung nach einem der vorhergehenden Ansprüche,
**dadurch gekennzeichnet,**
daß in Durchlaufrichtung betrachtet vor der einlaufseitigen und/oder nach der ausgangsseitigen Aufhängevorrichtung (z.B. DGL, GL2, SZV) zusätzlich mindestens eine Ablegevorrichtung (AV) zur Aufnahme des Speicherdrahtes (SD) vorgesehen ist.

21. Einrichtung nach Anspruch 20,
**dadurch gekennzeichnet,**
daß als Ablegevorrichtung (AV) eine Aufwickeltrommel vorgesehen ist.

22. Einrichtung nach einem der Ansprüche 19 oder 20,
**dadurch gekennzeichnet,**
daß die Ablegevorrichtung (AV) eine Standhöhe (D) aufweist, die etwa der Lagehöhe des Speicherkörpers (SD) in der jeweiligen Aufhängevorrichtung (DGL, GL2) entspricht.

23. Einrichtung nach einem der vorhergehenden Ansprüche,
**dadurch gekennzeichnet,**
daß eine Einlaufvorrichtung (FS) für die Verseilelemente (VE1 mit VE2) beim einlaufseitigen Ende des Speicherkörpers (SD) vorgesehen ist.

24. Einrichtung nach einem der vorhergehenden Ansprüche,
**dadurch gekennzeichnet,**
daß im Verlauf des Speicherkörpers (SD) mindestens ein Abdeckmittel (FR1, FR2) vorgesehen ist.

25. Verfahren zum Auswechseln des Speicherkörpers (SD) der Verseileinrichtung nach einem der vorhergehenden Ansprüche,
**dadurch gekennzeichnet,**
daß die Arretiermittel (K1* mit Km*, RK1 mit RKm) der eingangsseitigen und der ausgangsseitigen Aufhängevorrichtung (DGL, SZV) von ihrer Arretierstellung, in der das jeweilige Aufnahmeteil (AH2, AH1) gegen ungewolltes Lösen im Betrieb lagegesichert wird, in eine Freigabestellung gebracht werden, in der das jeweilige Aufnahmeteil (AH2, AH1) zum Ein- oder Ausbau des Speicherkörpers (SD) in axialer Richtung als Ganzes verschiebbar wird.

26. Verfahren nach Anspruch 25,
**dadurch gekennzeichnet,**
daß der Speicherkörper (SD) in Durchlaufrichtung (LA) betrachtet bei seiner Montage oder Demontage vor der einlaufseitigen und/oder nach der ausgangsseitigen Aufhängevorrichtung (DGL, GL2, SZV) zusätzlich in mindestens einer Ablegevorrichtung (AV) abgelegt wird.

## Claims

1. Device for stranding elongated stranding elements (VE1 to VEn) by using an axially extending supply body (SD) via which the stranding elements (VE1 to VEn) are fed in the axial direction LA) to a stranding disc (VS), and whose ends on the input side and output side seen in the axial direction (LA) are in each case held in the receiving part (AH2, AH1) of a suspension device (DGL, SZV), characterized in that the respective receiving part (AH2, AH1) in the suspension device (DGL, SZV) on the input side and output side is fixed with the aid of locking means (K1* to Km*, RK1 to RKm) which, in a release position, allow the respective receiving part (AH2, AH1) to be displaced as a whole in the axial direction (LA) for the purpose of installation or removal of the supply body (SD), and in a locking position secure said receiving part in position during operation against unintentional release.

2. Device according to Claim 1, characterized in that a supply wire is provided as the supply body (SD).

3. Device according to one of the preceding claims, characterized in that the suspension devices (DGL, SZV) on the input and/or output sides respectively have means (for example, AH2 in Figure 6; HT1 or HT2 in Figure 2) for axial prestressing of the supply body (SD).

4. Device according to one of the preceding claims, characterized in that the supply body (SD) and the stranding disc (VS) are jointly accommodated in the receiving part (AH1) on the output side.

5. Device according to one of the preceding claims, characterized in that the supply body (SD) is permanently connected at one of its ends to the stranding disc (VS).

6. Device according to one of the preceding claims, characterized in that further stranding components are provided in the respective receiving part (AH1, AH2).

7. Device according to Claim 6, characterized in that adapter discs (AS), stranding nipples or the like are provided as further stranding components.

8. Device according to one of the preceding claims, characterized in that the respective suspension device (DGL, SZV) has as locking means for axially securing its receiving part (AH2, AH1) latching balls (RK1 to RKm) which can latch tight in a transverse axial fashion into an associated latching groove (RNU) of the receiving part (AH2, AH1).

9. Device according to one of the preceding claims, characterized in that the respective suspension device (DGL, SZV) has self-closed connections as locking means for securing its receiving part (AH2, AH1) in the circumferential direction.

10. Device according to Claim 9, characterized in that the self-closed connection is effected by polygonal gearing between the receiving part (AH1, AH2) and its suspension device (SZV, DGL).

11. Device according to one of Claims 9 or 10, characterized in that the self-closed connection is effected by a conical seat between the respective receiving part (SV2) and its suspension device (DGL).

12. Device according to one of the preceding claims, characterized in that the respective receiving part (SV1, SV2) is constructed in a separable fashion.

13. Device according to one of the preceding claims, characterized in that the stranding disc (VS) and/or further stranding components (AS) in the respective receiving part (AH1, AH2) are secured in position in the circumferential direction by self-closed connections.

14. Device according to one of the preceding claims, characterized in that the supply body (SD) and the stranding disc (VS) are assigned a joint driving device (MO1).

15. Device according to one of Claims 1 to 13, characterized in that the supply body (SD) and the stranding disc (VS) are assigned separate driving devices.

16. Device according to one of Claims 14 or 15, characterized in that the respective driving device (MO1) is formed by a motor bored through at the centre and through whose passage opening the supply body (SD) is guided together with the stranding elements (VE1 to VEn).

17. Device according to one of the preceding claims, characterized in that the supply body (SD) is essentially freely accessible between the suspension devices (DGL, SZV) on the input and output sides.

18. Device according to one of the preceding claims, characterized in that the suspension device (SZV) on the output side is assigned a winding device (HWV).

19. Device according to one of the preceding claims, characterized in that electric and/or optical transmission elements are selected as stranding elements (VE1 to VEn).

20. Device according to one of the preceding claims, characterized in that seen in the direction of passage at least one depositing device (AV) for receiving the supply body (SD) is additionally provided upstream of the suspension device (for example, DGL) on the input side and/or downstream of the suspension device (for example, GL2, SZV) on the output side.

21. Device according to Claim 20, characterized in that a take-up drum is provided as depositing device (AV).

22. Device according to one of Claims 19 or 20, characterized in that the depositing device (AV) has a standing level (D) which corresponds approximately to the horizontal level of the supply body (SD) in the respective suspension device (DGL, GL2).

23. Device according to one of the preceding claims, characterized in that an input device (FS) for the stranding elements (VE1 to VE2) is provided at the end of the supply body (SD) on the input side.

24. Device according to one of the preceding claims, characterized in that at least one covering means (FR1, FR2) is provided in the course of the supply body (SD).

25. Method for exchanging the supply body (SD) of the stranding device according to one of the preceding claims, characterized in that the locking means (K1* to Km, RK1 to RKm) of the suspension device (DGL) on the input side and the suspension device (SZV) on the output side are brought from their locking position, in which the respective receiving part (AH2, AH1) is secured in position during operation against unintentional release, into a release position in which the respective receiving part (AHG2, AH1) can be displaced as a whole in the axial direction for the purpose of installation or removal of the supply body (SD).

26. Method according to Claim 25, characterized in that seen in the direction of passage (LA) the supply body (SD) during its assembly or disassembly is additionally deposited in at least one depositing device (AV) upstream of the suspension device (DGL) on the input side and/or downstream of the suspension device (GL2, SZV) on the output side.

## Revendications

1. Installation pour le câblage d'éléments allongés à câbler (VE1 à VEn), utilisant un corps accumulateur (SD) qui s'étend dans le sens axial, sur lequel les éléments à câbler (VE1 à VEn) sont conduits, dans la direction axiale (LA), à un disque de câblage (VS) et dont les extrémités côté entrée et côté sortie, considérées dans le sens axial (LA), sont respectivement maintenues dans la pièce de positionnement (AH2, AH1) d'un dispositif d'ancrage (DGL, SZV),
**caractérisé par le fait**
que la pièce de positionnement respective (AH2, AH1) est montée dans le dispositif d'ancrage (DGL, SZV), côté entrée et côté sortie, à l'aide de moyens d'arrêt (K1* à Km*, RK1 à RKm), qui, dans une position déverrouillée, permettent de déplacer en bloc, dans le sens axial (LA), la pièce de positionnement respective (AH2, AH1), pour monter et démonter le corps accumulateur (SD), et qui, dans une position de verrouillage, assurent la position de la pièce de positionnement respective (AH2, AH1) contre un déverrouillage intempestif pendant le fonctionnement.

2. Installation selon la revendication 1,
**caractérisé par le fait**
qu'un fil accumulateur est prévu comme corps accumulateur (SD).

3. Installation selon une des revendications précédentes,
**caractérisé par le fait**
que les dispositifs d'ancrage, côté entrée et/ou côté sortie, (DGL, SZV) comportent respectivement des moyens (par exemple, AH2 en figure 6, HT1, HT2 en figure 2) pour assurer une traction préliminaire axiale sur le corps accumulateur (SD).

4. Installation selon une des revendications précédentes,
**caractérisé par le fait**
que le corps accumulateur (SD) et le disque de câblage (VS) sont logés en commun dans la pièce de positionnement, côté sortie, (AH1).

5. Installation selon une des revendications précédentes,
**caractérisé par le fait**
que le corps accumulateur (SD) est relié solidement à une de ses extrémités au disque de câblage (VS).

6. Installation selon une des revendications précédentes,
**caractérisé par le fait**
que d'autres organes de câblage sont prévus dans la pièce de positionnement respective (AH1, AH2).

7. Installation selon la revendication 6,
**caractérisé par le fait**
que, en tant qu'autre organe de câblage, des disques adaptateurs (AS), des filières de câblage ou d'autres éléments semblables sont prévus.

8. Installation selon une des revendications précédentes,
**caractérisé par le fait**
que le dispositif d'ancrage respectif (DGL, SZV) comporte, en tant que moyens d'arrêt pour la sécurité axiale de sa pièce de positionnement (AH2, AH1), des billes d'arrêt (RK1 à RKm) qui peuvent s'encliqueter, perpendiculairement à l'axe, dans une gorge d'arrêt correspondante (RNU) de la pièce de positionnement (AH2, AH1).

9. Installation selon une des revendications précédentes,
**caractérisé par le fait**
que le dispositif d'ancrage respectif (DGL, SZV) comporte, en tant que moyens d'arrêt pour la sécurité de sa pièce de positionnement (AH2, AH1) dans la direction périphérique, des assemblages à engagement positif.

10. Installation selon la revendication 9,
**caractérisé par le fait**
que l'assemblage à engagement positif est assuré par un engrenage polygonal entre la pièce de positionnement (AH2, AH1) et son dispositif d'ancrage (SZV, DGL).

11. Installation selon une des revendications 9 ou 10,
**caractérisé par le fait**
que la liaison à engagement positif est assurée par un ajustement conique entre la pièce de positionnement respective (SV2) et son dispositif d'ancrage (DGL).

12. Installation selon une des revendications précédentes,
**caractérisé par le fait**
que la pièce de positionnement respective (SV1, SV2) est conçue en deux parties.

13. Installation selon une des revendications précédentes,
**caractérisé par le fait**
que la position du disque de câblage (VS) et/ou d'autres organes de câblage (AS) est assurée, dans la pièce de positionnement respective (AH1, AH2), par des assemblages à engagement positif dans la direction périphérique.

14. Installation selon une des revendications précédentes,
**caractérisé par le fait**
qu'un mécanisme d'entraînement commun (MO1) est affecté au corps accumulateur (SD) et au disque de câblage (VS).

15. Installation selon une des revendications 1 à 13,
**caractérisé par le fait**
que des mécanismes d'entraînement individuels sont affectés au corps accumulateur (SD) et au disque de câblage (VS).

16. Installation selon une des revendications 14 ou 15,
**caractérisé par le fait**
que le mécanisme respectif d'entraînement (MO1) est formé par un moteur creux en son centre, au travers de l'ouverture traversante duquel est guidé le corps accumulateur (SD) en commun avec les éléments à câbler VE1 à VEn.

17. Installation selon une des revendications précédentes,
**caractérisé par le fait**
que le corps accumulateur (SD) est, pour l'essentiel, librement accessible entre les dispositifs d'ancrage, côté entrée et côté sortie (DGL, SZV).

18. Installation selon une des revendications précédentes,
**caractérisé par le fait**
qu'un mécanisme d'enroulage (HWV) est affecté au dispositif d'ancrage côté sortie (SZV)

19. Installation selon une des revendications précédentes,
**caractérisé par le fait**
que des éléments de transmission électriques et/ou optiques sont choisis comme éléments à câbler (VE1 à VEn).

20. Installation selon une des revendications précédentes,
**caractérisé par le fait**
que, en complément, au moins un dispositif de dépose (AV) pour le stockage du fil accumulateur (SD) est prévu avant le dispositif d'ancrage, côté alimentation, (par exemple, DGL) et/ou après le dispositif d'ancrage côté sortie (par exemple, GL2, SZV), vus dans le sens de passage.

21. Installation selon la revendication 20,
**caractérisé par le fait**
qu'un tambour d'enroulage est prévu comme dispositif de dépose (AV).

22. Installation selon une des revendications 19 à 20,
**caractérisé par le fait**
que le dispositif de dépose (AV) a une hauteur supérieure (D) qui correspond environ à la hauteur de la position du corps accumulateur (SD) dans le dispositif d'ancrage respectif (DGL, GL2).

23. Installation selon une des revendications précédentes,
**caractérisé par le fait**
qu'un dispositif d'alimentation (FS) est prévu pour les éléments à câbler (VE1 à VEn) à l'extrémité côté alimentation du fil accumulateur (SD).

24. Installation selon une des revendications précédentes,
**caractérisé par le fait**
qu'au moins un moyen de recouvrement (FR1, FR2) est prévu sur le parcours du corps accumulateur (SD).

25. Procédé pour changer le fil accumulateur (SD) de l'installation de câblage selon une des revendications précédentes
**caractérisé par le fait**
que les moyens d'arrêt (K1* à Km*, RK1 à RKm) des dispositifs d'ancrage, côté entrée et côté sortie, (DGL, SZV) peuvent être manoeuvrés de leur position verrouillée, dans laquelle la position de la pièce de positionnement respective (AH2, AH1) est assurée contre un déverrouillage intempestif pendant le fonctionnement, dans une position déverrouillée, dans laquelle la pièce de positionnement respective (AH2, AH1) peut être déplacée dans son ensemble, dans la direction axiale, pour le montage et le démontage du corps accumulateur (SD).

26. Procédé selon la revendication 25
**caractérisé par le fait**
que le corps accumulateur (SD) est déposé, en complément, au moins dans un dispositif de dépose (AV) placé avant le dispositif d'ancrage côté alimentation (par exemple, DGL) et/ou après le dispositif d'ancrage côté sortie (par exemple, GL2, SZV), vus dans le sens de passage.
